# EUROPEAN PATENT SPECIFICATION

(11) **EP 4 043 195 B1**
(45) Date of publication and mention of the grant of the patent: **12.06.2024**
(21) Application number: 22157114.4
(22) Date of filing: 16.02.2022
(51) Int. Cl.: B29D 11/00

(54) **IN-SITU FABRICATION OF FREEFORM OPTICAL SURFACES**
IN-SITU-HERSTELLUNG VON OPTISCHEN FREIFORMFLÄCHEN
FABRICATION IN SITU DE SURFACES OPTIQUES DE FORME LIBRE

(30) Priority: 16.02.2021 EP 21157317
(43) Date of publication of application: 17.08.2022
(73) Proprietor: Albert-Ludwigs-Universität Freiburg, 79098 Freiburg (DE)
(72) Inventor: Weber, Stefan, 4057 Basel (CH); Banerjee, Kaustubh, 73430 Aalen (DE); Ataman, Caglar, 79100 Freiburg (DE); Rajaeipour, Pouya, 79106 Freiburg (DE)
(74) Representative: Mertzlufft-Paufler, Cornelius

(56) References cited:
- US-A1- 2005 056 953
- US-A1- 2005 253 291
- US-A1- 2005 264 756

## Description

The present disclosure concerns the field of freeform optics (FFO). In detail, the disclosure relates to a method according to claim 1 for fabricating and/or aligning an optical component, in particular a thin phase plate, within a beam path of an optical assembly and as part of said optical assembly. Such a beam path may be used for imaging an object using the optical assembly (imaging path) or it may be used for illuminating a scene (illumination path). The optical assembly may comprise at least one optical element that can receive light from or propagate light to said optical component along the beam path. We note at this point already that this method is also applicable to optical components comprising a non-tunable freeform optical surface and at least one first optical element that can receive light from or propagate light to said freeform optical surface along a beam path.

The disclosure further concerns such optical assemblies according to claim 12 (featuring multiple optical elements, including at least one FFOS) and optical components (featuring multiple optical elements, including least one FFOS).

The disclosure further concerns the use of a particular manufacturing tool according to claim 13 for rapid prototyping of passive freeform optical surfaces as part of an optical assembly or an optical component. This tool comprises a control interface for controlling and driving an actuator based on an optimization goal and mounting means for mounting an optical assembly or an optical component (within the tool).

Finally, the invention concerns a computer-implemented-method according to claim 15 for rapidly providing passive optical components or passive optical elements with custom-designed (and manufactured) freeform optical surfaces.

Furthermore, this application is based on the previous application EP 21157317.5.

With advances in automation and precision metrology of optical manufacturing, the design space for optical components began to expand exponentially in the early 1990s, going far beyond the humble spherical lens. Rotationally symmetric aspheres became state of the art in the 2000's and are still one of the key tools used by optical engineers to minimize aberrations in optical systems. The next big leap came in the mid-2010's in the form of off-axis aspheres, and so-called "Freeform Optics" (FFO), which forwent rotational-symmetry entirely. This also meant that traditional grinding and polishing fabrication methods were no longer sufficient, and a plethora of new manufacturing and metrology technologies have since been proposed to manufacture freeform optical surfaces (FFOS). According to the norm ISO17450-1, freeform optical surfaces (FFOS) have no translational or rotational symmetry about axes normal to the mean plane. FFOS are amongst current breakthrough topics in optics because they allow for more versatile, powerful, and compact optical designs that are interesting for many industrial sectors: automotive and mechanical engineering, medicine and materials processing, aircraft construction and consumer electronics, IT and life sciences, to name a few.

FFOS provide novel possibilities for optical designs within a large variety of specifications. One particular asset of FFOS is that they can deliver practically "aberration-free" optical quality with a reduced number of (passive) optical components resulting in compact optical designs. There are thus basically three main incentives for using FFOS: (i) achieving new optical functionality; (ii) improving optical performance; and (iii) enhancing compactness / reducing the number of optical elements in an optical assembly.

Despite the significant advantages in design flexibility that FFOS provide, the path from design over prototyping to mass production of FFOS is currently complicated as conventional optical manufacturing methods can no longer be used, because these methods are suited primarily for machining geometries with rotational symmetry. As a result, sophisticated high-end manufacturing techniques such as single-point diamond turning, femtosecond-laser ablation, or ion exchange diffusion are used in the state-of-the-art for manufacturing FFOS. All of these approaches require enormous resources (e.g. exotic and expensive materials), and complex, bulky, and expensive equipment, can only be handled by specialists, and as manufacturing time scales with the volume to be removed, they are typically very slow, which is a severe drawback for efficient testing and product development.

Low-cost approaches for defining FFOS such as inkjet printing on the other hand are often very limited in the optical quality of the surfaces / optical elements that can be defined. Other approaches such a using specially designed supportive frames which can define a liquid topography to be used as an optical interface have the severe drawback of allowing no tunability and hence flexibility w.r.t. the FFOS.

US 2005 0264756 A1, US 2005 0056953 A1 and US 2005 0253291 A1 each disclose devices for producing polymer lenses by means of a molding process. The molds used in this process each have at least one surface which is adjustable so that the shape of the associated lens surface can be adjusted when the lens is cast. In particular, US 2005 0264756 A1 proposes measuring a lens surface of such a polymer lens tuned by means of actuators during molding with an optical measuring system in order to be able to control the actuators on the basis of the measurement result.

In this context, it is an object of the present invention to simplify and accelerate both the optical manufacturing of FFOS and the integration of FFOS into complex optical assemblies and optical components. A particular objective of the invention is to enable manufacturing of planar optical components with complex surface shapes in a rapid, precise, and resource-efficient manner, and to enable rapid prototyping of passive FFOS and thereby to accelerate product development in the field of FOS.

In accordance with the present invention, a method is provided according to claim 1, which solves the afore-mentioned problem. In particular the invention proposes a method as introduced at the beginning, which, in addition, is characterized by the following steps and features: the optical component, which forms part of said optical assembly, features an initially tunable freeform optical surface; the optical component is arranged in the optical assembly at its final location within the assembly; using an actuator, the freeform optical surface is (actively) tuned in-situ (i.e. at its final location within the assembly) into a tuned shape according to an optimization goal; the tuned shape of the freeform optical surface (FFOS) is fixed to convert the freeform optical surface into a non-tunable frozen surface shape. By freezing the surface shape of the FFOS the component is thus transformed into a passive optical component of the optical assembly.

This method is both applicable to refractive (transmissive) and reflective (partly transmissive or non-transmissive) FFOS.

The tuning of the FFOS may comprise deforming the FFOS into a particular desired tuned shape and/or re-locating/aligning this shape to said beam path, for example by shifting the tuned shape slightly within an xy-plane that is defined by an optical z-axis characterizing said beam path.

The fixation of the tuned FFOS may be achieved by various means. For example, the FFOS (which may be a reflective mirror surface for example) in its tuned shape may be frozen by using an embedding material or a fixation means, e.g. a glue layer. Importantly, the fixation according to the invention shall be permanent and irreversible thus transforming the fixated FFOS into a passive optical interface (that is optimized according to the optimization goal).

An optical assembly may be understood herein as an optical setup (along one or more optical axes) which comprises several optical components or elements, for example an imaging lens group, an illumination system or a camera system, also including sensors and/or actuators and/or active optical components and/or optical filters etc.

An optical component may be understood here as a separate entity that can be handled separately from other components of an assembly, for example a lens, a mirror, a prism, a beam splitter or a phase plate.

An optical element may be understood here as a part of an optical component, for example a refractive, reflective or diffractive optical surface or a light pipe or an active optical element such as a tunable filter or tunable optical surface.

Accordingly, the fabricated non-tunable FFOS may be understood as a passive optical element. The latter may be part of a single optical component that is a stand-alone component (as will be detailed below) or which forms an essential part of a more complex optical assembly (as laid out above).

Optical assemblies or components designed and/or manufactured according to the invention can also comprise multiple FFOS, which have each been tuned in-situ (meaning at their respective final location within the component / the assembly) before being frozen/fixated. The in-situ tuning of multiple FFOS can be done simultaneously (in particular using sophisticated control algorithms as used for controlling cascaded wavefront modulators) or consecutively (i.e., one-after-the-other).

In classical manufacturing techniques, the final assembly of a complex optical assembly often includes a step of active alignment. Such a step may be avoided because the in-situ tuning and curing also allows compensation of alignment tolerances of the other elements of the assembly. In other words, the in-situ tuning of at least one FFOS as proposed herein can avoid laborious final alignment of multiple optical elements or components within an assembly. In particular when using multiple FFOS (as optical elements of a single optical component or as optical components within an assembly, in each case fabricated and/or aligned according to the method of the invention), these fine-tuned FFOS may be used as active correcting elements to compensate for alignment errors of other optical elements of the assembly (or the component) and/or other fabrication tolerances / errors.

Another large benefit of the method presented herein is that the turn-around time in product development can be greatly reduced, because multiple configurations of an optical assembly can be rapidly tested, because the fabrication of various FFOS is so much accelerated and simplified, as compared to conventional methods.

In addition, the method can even be applied on the spot at the location of a particular customer, thus taking into consideration a specific optimization goal, that is only known at the site of the customer. This is particularly interesting for medical applications, in which a medical imaging system can be tailored to the needs of a specific patient by tailoring the FFOS as part of that imaging system.

The method may be applied to an application case A) in which the FFOS forms an inherent part of a single optical component (featuring multiple optical elements) or a complex optical assembly. In this case, the in-situ-tuning can be employed to boost the optical performance of the component / assembly. In case A), the FFOS thus serves to solve issues associated with alignment tolerances of alignment sensitive elements.

In another application case B), the FFOS merely serves as a corrective element for boosting the optical performance of an optical assembly, which already delivers a meaningful but sub-optimal optical functionality before the FFOS is introduced into the beam path of that assembly. In such a case, the FFOS will thus be an additional but not inherent optical element of the optical design of the assembly. This approach can help in situations in which an existing optical assembly is plagued by manufacturing or alignment tolerances.

The in-situ tuning can also, at least partly, compensate alignment errors (e.g., x-y-shift, z-misalignment, tilts etc.), which have been introduced when arranging the FFOS within the assembly (e.g., introducing a phase plate forming the FFOS into the assembly at its final location) or when forming the FFOS as an optical element of an optical component (e.g., a complex prism featuring multiple optical surfaces). The method thus solves a major practical challenge associated with the use of complex FFOS, namely, how to align these FFOS accurately within an optical assembly or a complex optical component. In-situ-tuning thus also allows in-situ alignment. This is because the actuator employed can be driven such that the center or orientation of the FFOS (w.r.t. to its major optical axis) can be shifted as required.

The proposed method can be further elaborated as described in the sub-claims:
The method can be applied to great advantage, in case at least one passive optical component or passive optical element of said assembly is sharing said beam path with said optical component / said FFOS during the in-situ tuning of the freeform optical surface (FFOS) to be fabricated (which is already located at its final location). The beam path may be, in particular, a beam path of an optical metrology system that is employed for providing feedback for the in-situ tuning (as will be detailed below). The at least one passive optical component or passive optical element may be remote from said freeform optical surface and/or already fabricated and/or already aligned and/or it may not be fabricated from a liquid that forms the FFOS. For example, such a passive optical element can be an existing transmissive optical glass interface or an already existing optical surface of a mirror.

In case of a complex assembly, the freeform optical surface (to be fabricated) may be located, during the in-situ tuning, in between at least two passive optical components or passive optical elements of said assembly (or stand-alone component) sharing said beam path.

According to one particular embodiment, the actuator may be, at least in part but preferably fully, integrated into said passive optical component. In such a case, the actuator may thus be rendered in-operable as soon as the freeform optical surface is fixed such that the optical component becomes a non-tunable optical component. In other words, the actuator will remain (at least in part) with the fabricated optical component / element. However, it is also possible to employ re-usable actuators for tuning the FFOS in-situ, which will thus not form part of the component.

This concept thus suggests using a tuning-mechanism that is built in part or fully into the component to define a specific FFOS and switching this tuning mechanism off (in particular by solidifying a liquid - see below) and thus freezing the mechanism. As a result, various types of complex FFOS can be fabricated at low costs, because the same initially tunable FFOS of said component can be tuned into a myriad of different tuned shapes, which best meet the requirements of a particular optical assembly.

Preferably, the tuning mechanism employed may be an optofluidic tuning that is based on reshaping a liquid volume. This may be done by various actuation mechanism including electrowetting-on-dielectrics (EWOD) or other direct electrofluidic actuation mechanism. Such approaches may be realized, in particular without using a membrane.

Other possible tuning and/or actuation mechanism include electrostatic and piezoelectric actuation. Preferably, the actuator may comprise a passive liquid that allows push-pull actuation of a tunable membrane. This membrane, which may be transparent or reflective, may define the FFOS.

Even more preferably, the actuator may comprise at least one compensation actuation element, which is/are arranged outside of an optical aperture of the component. Hence, the at least one compensation actuation element may be arranged outside of an area, which defines the freeform optical surface that lies within said beam path used in the component or said assembly. Most preferably, a multitude of such compensation actuation elements, which are distributed in a peripheral area surrounding said optical area, can be employed / can be comprised in the actuator.

Alternatively, an external actuator may be used for in-situ tuning of the FFOS. In this case, the actuator will not be part of the fabricated optical component / element.

According to one particular embodiment, the in-situ-tuning may be performed by deforming a volume of a solidifiable liquid into a liquid shape using the actuator. In this case, the final non-tunable frozen freeform optical surface can be obtained by solidifying the liquid into a non-tunable optical volume, in particular a non-tunable optical layer, which defines the frozen surface shape of the freeform optical surface.

Accordingly, the tuned shape of the FFOS may be the shape obtained after tuning but prior to solidification of the liquid. The frozen surface shape, which defines the final optical properties of the FFOS, is the shape / surface profile which is reached after fully curing/solidifying the liquid.

We note at this point, that the tuned shape obtained during tuning may deviate from the frozen surface shape; in particular, the FFOS may be tuned into the tuned shape as a pre-compensated configuration to achieve a particular intended frozen surface shape, as will be described below in more detail w.r.t. curing artifacts.

The solidification of the liquid may be achieved by chemical or UV- or thermal curing for example. Suitable liquids are thus chemically or UV- or thermally curable polymers.

If the FFOS is an external reflective surface, the liquid may not even need to be transparent for the wavelength of light to be sent through the assembly. In case the FFOS is a refractive surface or an internal reflective surface, the liquid should be sufficiently transparent for the wavelengths of interest.

We further note that the liquid may also be used to form an optical (i.e., wavelength selective) filter, as the liquid may absorb particular wavelengths to be blocked or at least diminished in intensity. For this purpose, the liquid may include colorants or absorbents. The in-situ tuning can thus also be used to achieve a particular desired amount of optical filtering/optical absorption, for example by changing the liquid shape during tuning and thereby the optical path length within the liquid and thereby the optical absorption delivered by the optical layer formed by the liquid. This is particular of interest for customizing/fine-tuning an illumination.

The in-situ tuning can be most accurately performed in case it is based on feedback from a sensor that provides information about a current shape of the freeform optical surface.

According to a preferred embodiment, a curing artifact (which occurs during the solidification of said liquid) may be (at least partly) pre-compensated by in-situ tuning the freeform optical surface, considering at least one compensation factor. Such curing artifacts may be a shrinkage of the liquid, which may depend locally on the particular surface shape of the FFOS to be tuned (such that the shrinkage may be anisotropic, at least in magnitude) and/or a change of the refractive index of the liquid. Due to such curing artifacts, the tuned shape of the freeform optical surface may deviate from the frozen surface shape of the freeform optical surface which is reached after the liquid has been fully cured and/or solidified. In addition, the optical phase shift introduced by the FFOS may vary (due to the change in refractive index) even when the shrinkage and resulting shape deformation is negligibly small.

The compensation factor can be obtained from pre-experiments, which characterize the specific shrinkage and/or expansion of the liquid because of the solidification, in particular as a function of said tuned shape and/or the specific change of refractive index (due to curing) of the liquid employed. The compensation factor can also consider at least one ambient factor such as a temperature or a humidity that is currently measured, because such factors will also affect the curing process.

As explained, the curing of the liquid may induce a significant shift in the refractive index of the liquid. This index shift will thus also affect the optical phase change that is induced by the solidified liquid when a wavefront passes through the liquid. However, such changes can also be determined in pre-experiments and considered when tuning the tuned shape of the FFOS. Thus, said pre-compensation may also consider a shift of refractive index (RI) which occurs when solidifying the liquid (= difference between RI of uncured and fully cured liquid).

We also note that not only empirical models may be used for calculating a suitable pre-compensation to be considered / applied when tuning the liquid in-situ, but also numerical / computational models may be used, in particular for estimating the optical effects resulting from said change in refractive index.

The compensation factor may have the effect that the tuned shape that is tuned in-situ just before solidifying the liquid deviates from a shape that would best meet said optimization goal. However, by considering such curing artifacts, the frozen surface shape of the FFOS which is reached after the liquid has been fully solidified/cured will be optimized to meet said optimization goal.

In particular, the in-situ-tuning can be performed stepwise such that after an initial curing of said liquid, the freeform optical surface is re-tuned using the actuator, i.e. before the curing of the liquid is finally completed to fully fixate the freeform optical surface into the frozen surface shape (18) .

For example, the initial curing step may result in a 80% partial curing of the total volume of said liquid, and the remaining 20% may be cured in a second curing step, performed after the re-tuning.

Moreover, by the proposed re-tuning, unwanted deformations of the FFOS during solidification of the liquid can be mitigated.

Depending on the volume of the liquid and tuned shape of the FFOS to be achieved, it may be helpful to even re-tune the FFOS while curing is performed. Such an approach is particularly useful if the re-tuning is monitored by suitable metrology means, as laid out in more detail below.

The actuator used may comprise a multitude of individually tunable actuation elements, which are arranged within an optical aperture of said optical component. This has the advantage that highly complex FFOS can be tuned accurately. In such a situation, at least two deflection points of the freeform optical surface may be tuned. Moreover, the freeform optical surface may thus be described by a surface profile which includes Zernike polynomials Zm,n with n ≥ 3 (radial order of at least R3, with R being the radial coordinate). Said optical aperture may be defined as the area of the final FFOS of said component through with said beam path passes.

Using such sophisticated actuation schemes allows to define highly complex shapes of the FFOS and thus to compensate even high order optical aberrations (which may be described by Zernike polynomials Zm,n with n ≥ 3). Such aberrations may be present in the optical assembly due to fabrication or alignment tolerances of the at least one (further) optical element or even due to optical aberrations, which are inherent to said element(s) and cannot be avoided. Moreover, as already explained, such complex shapes are also highly beneficial for boosting the optical performance of the complete optical assembly. In addition, the freedom of design for the overall assembly is increased, because the freely tunable FFOS can provide novel optical functionality such that other elements of the assembly can be designed simpler (i.e., less complex, and hence easier and cheaper to fabricate) or with larger tolerances.

The actuator may also feature multiple separately tunable actuation elements. These actuation elements may be arranged within said optical aperture and/or configured to tune a liquid interface directly (e.g., when using electrowetting-on-dielectrics (EWOD) or dielectrophoresis (DEP) as an actuation mechanism) or via a tunable membrane. In both cases different surface shapes of the liquid/the membrane and thereby of the freeform optical surface can be tuned in-situ.

Suitable actuation elements may also be piezo-electric micro-actuators embedded into or deposited on the membrane. Such a design is particularly useful for reflective FFOS, where the actuators do not need to be transparent. If the piezo actuators offer transparency at the wavelength of interest, transmissive FFOS can be implemented.

Another approach is to employ electrodes either on a substrate or embedded into/deposited on a tunable membrane. In both cases, such actuation elements can be used to deform a liquid interface (in particular, directly without a membrane) and/or said membrane (e.g., by electrostatic actuation of the membrane) into complex FFOS-shapes. This approach is both applicable to transmissive and reflective FFOS. The actuation elements may thus be used for tuned the liquid shape electrostatically, for example. For this purpose, the membrane itself may carry a counter electrode (e.g., a GND-electrode) or the membrane may carry said actuation elements (in this case a GND-electrode may be deposited on a substrate over which the membrane is suspended).

The actuation elements can be highly transparent by using high transparency materials such as indium tin oxide (ITO) and/or by using a passive optical liquid that lowers reflective losses at the optical interfaces.

Another approach suggests that the in-situ-tuning is performed based on (preferably optical) metrology data which are measured while the in-situ-tuning is performed. Such metrology data may be obtained: (i) from the tuned freeform optical surface of the optical element directly, for example by optical inspection of the freeform optical surface using a wavefront sensor; and/or (ii) from the optical assembly, for example by measuring the modulation transfer function or another suitable optical metric which characterizes the current optical performance of the assembly.

Approach (i) can be useful for providing feedback for accurate tuning of the FFOS. This is particularly helpful in cases where a required optical correction, which is provided by the passive optical element / the FFOS to be fabricated, is known, for example based on an estimation or based on an optical simulation of the assembly or based on an optical pre-measurement of the assembly (without the FFOS in place) or based on measured alignment errors of other elements of the assembly.

Approach (ii) is particularly helpful for optical assemblies for which the necessary correction is not known or difficult to measure or estimate. By performing a live-measurement of the optical performance of the completed assembly, while actively tuning the FFOS in-situ, it is possible to tune the FFOS until the measured performance is maximized. Afterwards the so found tuned shape of the FFOS can be freezed in-situ, i.e., the FFOS can be fixed in the found optimum configuration / tuning state on the spot at the final location within the assembly. As a great advantage, no alignment must be done afterwards, as the passive optical element / the FFOS is already located in its final location within the assembly.

The metrology data can also be evaluated against the optimization goal. In other words, the tuning can be performed until the metrology data, which are obtained live during the in-situ-tuning, are optimized w.r.t. to said optimization goal. Said goal may be one particular quantity to be maximized or a more complex set of conditions to be optimized (e.g., increasing the MTF of the overall assembly in two particular regions of spatial frequencies; reducing stray light; maximizing light throughput; minimizing wavefront errors; increasing imaging resolution or focusing quality; etc.); in other words, the optimization goal can be a complex function of multiple variables to be optimized. Of course, such figure of merits will largely depend on the optical assembly and its optical function to be optimized.

Most preferably, the metrology data can be obtained in an optical measurement, e.g., a wavefront measurement or an MTF-measurement. However, it is also possible to obtain metrology data by other sensing approaches such as indirect sensing by measuring mechanical strain or other measurable quantities.

To provides some examples, a figure of merit characterizing the final optical assembly including the passive optical component such as a modulation transfer function (MTF); or a wavefront aberration; or an image distortion; or an image contrast; or a maximum number of discernible objects within a sample image; or a deviation of an illumination intensity distribution from a target distribution; or an optical resolution; or a minimum focal spot size; or a maximum light intensity and/or a maximum uniformity of illumination; or a numerical value characterizing a point-spread function may be optimized as a result of the active in-situ tuning of the freeform optical surface. Optimization may thus mean maximizing a quantity (e.g., the MTF) and/or minimizing a/another quantity (e.g., the focal spot size).

As explained in the beginning, the method presented so far is not only applicable to complex assemblies of multiple optical components but also to single optical components formed by multiple optical elements. Accordingly, said optical assembly may be merely a single optical component featuring a first optical element and a second optical element, and said passive optical component providing the freeform optical surface may in fact be said second optical element.

In other words, the method can be used for tuning in-situ an FFOS which forms an optical element (e.g., a reflective or transmissive optical interface) of a single optical component. Again the FFOS may be tuned in-situ at its final location (not within an assembly now but) within the component to be fabricated. In particular, during the in-situ tuning of the FFOS, the FFOS may share a common beam path with said first element. If the component to be fabricated offers already two such (pre-existing) passive optical elements, the FFOS may be located in between these at least two passive optical elements of said component to be fabricated, and all three optical elements may then share said beam path during the in-situ tuning but also in the final component.

In such cases, it is preferred if the freeform optical surface of the second optical element (is tuned such that it) compensates, at least partly, an optical aberration which is introduced by the first optical element. Thereby, the newly formed FFOS can boost the optical performance of the overall optical component.

We note at this point that the first element must not necessarily be the element on which light of a used beam path impinges first. For example, the first element may be an element that receives light from the second element of the optical component. We also note that any beam path may be inversed, in principle.

It is evident that all features of the method previously explained can be likewise applied to this specific case of a single component with at least two optical elements. The step of arranging the optical element within the optical component can thus be simply the formation and/or definition and/or fixation and/or positioning of the tunable FFOS at its final location within the optical component.

For example, consider the case of a prism as an optical component with a first non-tunable optical element in the form of a first optical (e.g., refractive) surface and a second optical element in the form of an initially tunable (e.g., reflective) FFOS, that is fabricated according to the invention. Again, the in-situ tuning and freezing of the FFOS, i.e., of said second optical element, can be highly beneficial to boost the performance of the prism, in particular by compensating optical aberrations which are introduced by the first optical element (i.e., said refractive surface of the prism).

To solve the afore-mentioned problem the invention also suggests an optical assembly or optical component as introduced in the beginning. This assembly / component is characterized in that the freeform optical surface is formed by a second optical element and has been aligned and/or fabricated with a method according to one of the claims directed towards a fabrication method and/or as described previously.

Alternatively, or additionally, we may consider as distinctive of said assembly / component that said second optical element, which forms part of said optical assembly or optical component, features actuation means for
in-situ tuning of the freeform optical surface, for example an initially tunable membrane and/or actuation elements. In addition, or alternatively, said assembly / component may also be characterized in that it features (at least part of) a now in-operable actuator, by which the freeform optical surface has been tuned into a tuned shape (and thus fabricated).

For enabling rapid prototyping of passive freeform optical surfaces, the invention also suggests the use of a particular manufacturing tool, which comprises a control interface for controlling and driving an actuator based on an optimization goal (as described above), and mounting means for mounting an optical assembly or an optical component (within the tool). This tool may be used in such a way that an optical assembly or an optical component comprising an already fabricated optical element that is already aligned within the component is mounted using the mounting means into a final configuration; a computer is used to drive an actuator via the control interface; and the actuator thus initially tunes said freeform optical surfaces in-situ as an optical element of the optical assembly / the optical component into a tuned shape according to said optimization goal; finally, the tuned shape of the freeform optical surface is fixed;

The actuator mentioned may be an external actuator (not forming part of the fabricated element/component) or an (at least partly) built-in actuator, as described previously.

It is evident from the previous explanations that the computer which controls the actuator may also consider metrology data measured during the in-situ tuning and/or data from a sensor that provides feedback for tuning the actuator. The computer may be an external personal computer or mobile electronic device; the computer can also be implemented as part of the manufacturing tool, e.g., by a micro-controller with sufficient computing power.

The control interface may be configured to receive (preferably digital) control signals from the computer and converts them to suitable electrical drive signals / drive voltages for driving the actuator. When using electrostatic actuation, as an example, the control interface may supply high voltages to the actuator (e.g., > 200 V).

The tool may further comprise any one or a combination of the following items: fixating means which are used for fixating a particular tuned shape of the FFOS - this may be a heat source or a UV-exposure system or a timer or sensor for monitoring a chemical curing process, for example; metrology means, which are used for gathering metrology data during the in-situ tuning of the FFOS, in particular a wavefront or image sensor configured to live-inspect the freeform optical surface and/or an optical metrology system for measuring at least one optical figure of merit (e.g., an image contrast, a MTF, etc.) of the assembly and/or of the optical component (to be fabricated) and/or a metrology system for indirectly measuring said tuned shape (e.g. mechanical stress sensors embedded in the tuned membrane or any other suitable sensor concept) and/or for providing feedback to said actuator.

The manufacturing tool may thus be used for smart in-situ manufacturing of FFOS as part of an optical assembly or optical component. Using the proposed method and tool, residual assembly errors may be eliminated in complex optical assemblies. Such errors may comprise systematic design imperfections as well as random errors added during physical assembly of the components of the assembly (which will be different for every manufactured & assembly). The in-situ tuning of at least one FFOS can eliminate such errors and optimized optical components and assemblies can thus be obtained. Moreover, as viewed from a design perspective, design and assembly tolerances can be significantly relaxed, which is particularly important for FFOS.

Finally, the invention also suggests a computer-implemented-method for more rapidly providing passive optical components or passive optical elements with custom-designed freeform optical surfaces according to independent claim 15.

We note at this point that the first set of design data does not include the FFOS, but the extended optical model does. The extended optical model thus describes the assembly or component after the FFOS has been (virtually) inserted (e.g., a sub-model describing the FFOS may be incorporated into the first optical model to form the extended optical model by the computer).

The optimization of the FFOS may also include variation of a thickness of an optical layer forming the FFOS as well as a position (in x/y/z) of the FFOS within the assembly / the component. There may also be boundary conditions inherent to a particular assembly / component such as a maximum thickness of the layer forming a FFOS or an available space, in which the FFOS can be located. Such boundary conditions may be part of said first set of design data.

In simple words, the computer thus receives a first model as input and outputs an extended model which describes a position and optimized shape of the FFOS within the assembly component. After optimization, the extended model also includes an optimized surface shape and/or position of said FFOS.

The step of calculating an optimized tuned shape for the freeform optical surface may include several iterations with different types of FFOS; each of those different FFOS types may be tunable/formable with a particular one of a number of available different actuators. For example, one type of actuator may be optimized for large tuning range w.r.t. to lower order aberrations, while another actuator may be optimized for tuning higher order aberrations. Accordingly, each of these different types of FFOS (which may be represented by a digital/optical model) may be characterized by a possible range of tunable surface profiles (which will be linked to the tuning range offered by the associated acutator). Based on said optimization, the computer can thus compute optimized tuned shapes (lying thus within the range of the chosen FFOS-type) for each of said different FFOS types. Moreover, the computer can then decide, based on said optimization goal, which of these different available FFOS types is best suited for meeting the optimization goal. Accordingly, the computer can thus deliver a set of surface parameters and the type of FFOS (chosen from a set of predefined and available FFOS types) for which these surface parameters have been optimized. Most preferably, the optical component / said freeform optical surface may then be fabricated and/or aligned / assembled using a method and/or tool as described before and using the set of surface parameters delivered by the computer. However, it is also possible to manufacture the desired custom-made optical component featuring the optimized freeform optical surface by conventional methods such as one-point diamond turning but again using said set of surface parameters which is finally delivered by the computer.

This computer-implemented-method may be used, in particular, to implement a rapid prototyping service delivering various FFOS that are tailored to the need of a customer. The transfer of the required first set of digital optical design data may be done via an online portal for example.

As already mentioned, the set of surface parameters that the computer finally delivers are intended and employed for fabricating the freeform optical surface. Most preferably, this may be achieved by actively tuning the freeform optical surface in-situ into a tuned shape (according to said surface parameters which may serve as input data for controlling said actuator) and by finally fixing the freeform optical surface to render the freeform optical surface into a non-tunable frozen surface shape.

In other words, the freeform optical surface of said optical component or said optical element may be fabricated using a method as described before and/or a manufacturing tool as presented herein.

In summary, the methods, and tools according to the invention enable highly flexible manufacturing of FFOS. The manufacturing can be agile and may form part of a fully digitalized process chain used for rapid prototyping and/or optical system development. As the method is fast, it can result in reduced turn-around times and shortened product development cycles. Moreover, the method may allow rapid deployment of custom-specific freeform optics at the site of the customer, in particular, using the presented tool.

Preferred examples of the present invention shall now be described in more detail.

With reference to the accompanying drawings, where features with corresponding technical function are referenced with same numerals even when these features differ in shape or design:
- Fig. 1: presents two cross-sections of classical optical components,
- Fig. 2: shows a top view on a freeform surface profile of a first component, fabricated with a method according to the invention,
- Fig. 3: illustrates two cross-sections through the freeform optical surface (FFOS) of Figure 2,
- Fig. 4: illustrates the in-situ tuning and fixation/freezing of an initially tunable FFOS,
- Fig. 5: illustrates a schematic process flow chart,
- Fig. 6: illustrates details of the single steps performed during in-situ tuning and freezing of the FFOS,
- Fig. 7: illustrates the use of live-metrology data for improved in-situ tuning,
- Fig. 8: illustrates the use of a wavefront sensor for obtaining live-metrology data,
- Fig. 9: illustrates the potential of the in-situ tuning proposed herein for boosting the performance of a complex imaging lens assembly,
- Fig. 10: shows an example of in-situ tuning two FFOS which are arranged in series along a beam path,
- Fig. 11: shows another example of in-situ tuning of multiple FFOS within an optical assembly,
- Fig. 12: illustrates an example of using two reflective FFOS fabricated in-situ within an optical assembly,
- Fig. 13: illustrates the examples of transmissive and reflective FFOS fabricated according to the invention,
- Fig. 14: illustrates the use of feedback from an image sensor for improved in-situ tuning of an FFOS,
- Fig. 15: shows a possible implementation of a built-in actuator that allows push-pull liquid actuation for in-situ tuning of an FFOS,
- Fig. 16: illustrates in-situ tuning and fabrication of an FFOS according to the invention, using a multi-usedeformable mold,
- Fig. 17: illustrates different Zernike polynomials,
- Fig. 18: illustrates a simulated example of how in-situ tuning can improve the modulation-transfer-function of an optical system comprising an FFOS fabricated by the method according to the invention, and
- Fig. 19: provides a schematic flow chart of a possible implementation of a fabrication method according to the invention.

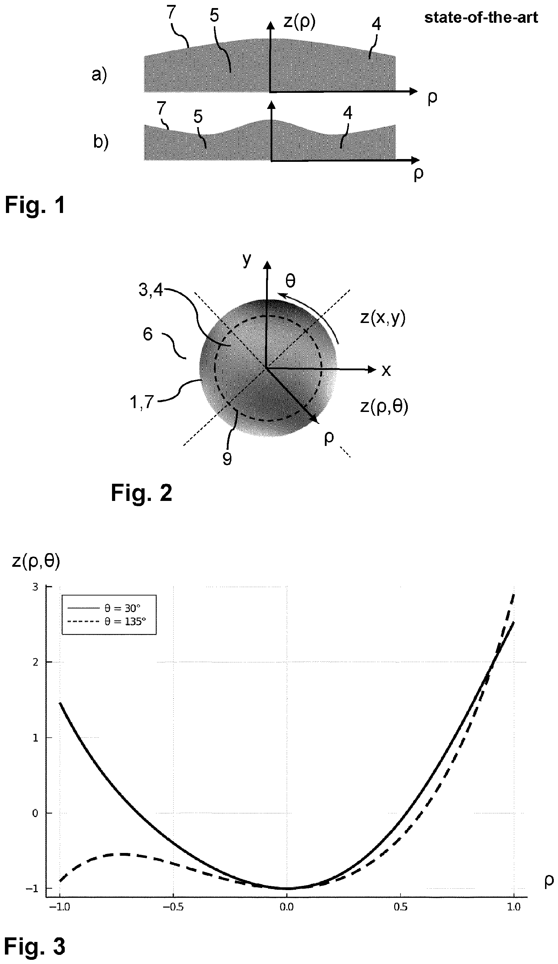

Figure 1 presents two examples of cross-sections of two classical optical components, namely a) a spherical plano-convex lens 5 with a surface profile z(ρ) with ρ being the radial coordinate and z(ρ) the height of the profile above the mean plane and b) a lens 5 with aspherical profile. Both lenses are designed and manufactured with perfect rotational symmetry.

By contrast, Figure 2 presents a top view on a surface profile 7 of a first optical component 1 fabricated with a method according to the invention, where the gray value represents the local z-height of the profile 7. This surface profile 7 (z(x,y) or z(ρ,θ) depending on the coordinate system chosen), can be described by the formula z = 1.0*Z2,0 + 2.0*Z2,2 + 0.3*Z3,3 + 1.4*Z3,-3 + 1.0*Z5,5, with Zn,m being the Zernike polynomial Z of coefficients n,m where m and n are non-negative integers with n ≥ m ≥ 0 (m = 0 for even Zernike polynomials). This profile z(x,y) 7 lacks translational or rotational symmetry about axes normal to the mean plane 36 and thus represents a freeform optical surface 3 (FFOS). In other words, height profiles along perpendicular cross-sections of the profile 7 (as indicated by the dashed lines) in Figure 2 will be different for this component 1, which forms a freeform optical phase plate 2 (FFPP). Another way of looking at this optical component 1 and/or of characterizing its FFOS 3 is that the FFOS 3 introduces a phase-shift ϕ(ρ,θ) that varies both with the radial coordinate ρ as well as with the azimuth angle θ (cf. Figure 2).

Yet another way of defining a FFOS 3, in distinction from classical optical surfaces as the ones shown in Figure 1, is that when taking any cross-section (within in a range ρ = [0..Rₘₐₓ] with Rₘₐₓ the maximum radius), for example from the FFOS shown in Figure 2, and rotating it around the optical z-axis by 360° thus producing a surface of revolution S, a FFOS 3 will be characterized in that it will deviate from the surface S at least at one coordinate (but typically on multiple coordinates), in particular within the optical aperture. This is readily apparent by comparing the cross-sections through the surface profile 7 of Figure 2 at two different azimuth angles θ illustrated in Figure 3. It is also apparent, that there may be at least one cross-sectional height profile (at a certain angle θ), which lacks symmetry to the optical axis (running in the z-direction at x=0, y=0).

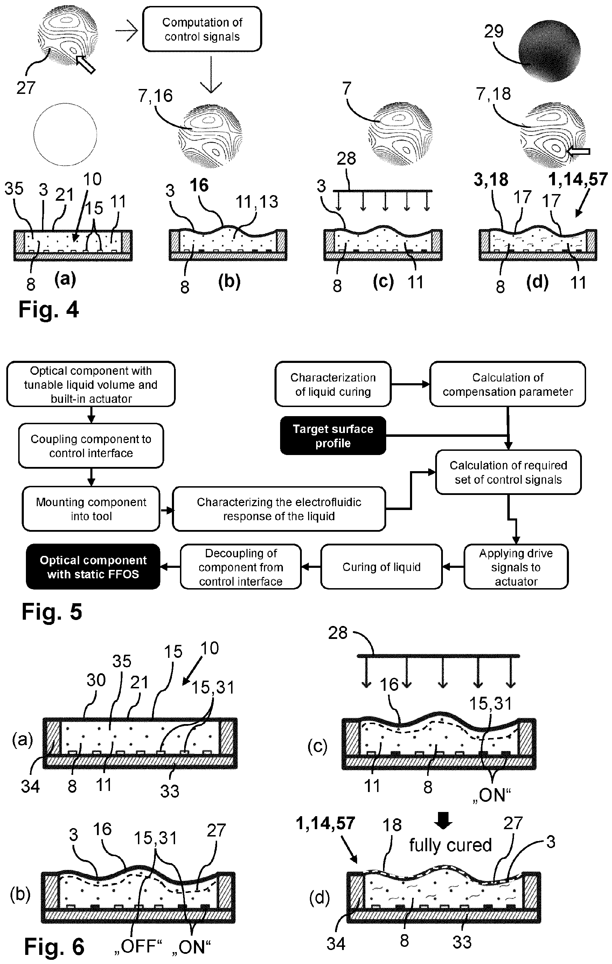

Figure 4 illustrates the tuning and fixation/freezing of an initially tunable freeform optical surface 3 (FFOS): in step (a), an optical component 1 in the form of a transmissive phase plate 14 is seen that features a chamber 35 filled with a solidifiable liquid 11 that is covered with a membrane 21. The liquid 11 and the membrane 21 thus define the shape of the FFOS 3. The component 1 features a built-in actuator 10 that uses electrodes as actuation elements 15 for electrostatically deforming the membrane 21 and thereby the shape of the optical layer 8 that is formed by the liquid 11. The upper contour plot on the left in Figure 4 illustrates a target surface profile 27 into which the membrane 21 shall be tuned. The lower contour plot (which shows no lines) indicates that the membrane 21 is initially flat, as the actuator 10 has not yet tuned the membrane 21 in (a). After calculating suitable control signals (which are converted into suitable drive voltages), the actuator 10 is driven such that it deforms the membrane 21 and thereby the liquid 11 into the tuned shape 16 illustrated in (b). As the corresponding contour plot shows, the surface profile 7 of the membrane 21 now matches closely the desired target surface profile 27. In the next step (c) the tuned FFOS 3 is fixated and thereby its shape is frozen by UV-curing the liquid 11 which thus solidifies into a non-tunable solid optical layer 8. As indicated in (d), after fully curing the liquid 11, the final frozen shape 18 of the FFOS 3 slightly deviates from the tuned shape 16 (as can be seen by comparing the respective contour lines) and therefore also from the initial target 27, due to curing artifacts, i.e., shape deformations that occur during the solidification of the liquid 11. As the right upper heat map shows, there remains thus a residual error 29 between the target surface profile 27 and the final frozen shape 18 of the FFOS 3. But even if the target 27 could be met perfectly by the frozen shape 18, there may be a change in the phase shift introduced by the FFOS 3, due to a change in refractive index of the liquid 11 during curing (which is another possible curing artifact).

Figure 5 illustrates a more detailed possible process flow for fabricating the optical component 1 of Figure 4 using the method according to the invention: After coupling the component 1 to a control interface 23 and mounting the component 1 into a manufacturing tool 22 as previously described, the electrofluidic response of the liquid 11 is first characterized using metrology means 24 by tuning the liquid 11 using the built-in actuator 10. Electrofluidic response may be understood here as the response of the shape of the liquid in reaction to any suitable electric actuation mechanism, including direct electrofluidic actuation, such as EWOD or DEP, or indirect electrofluidic actuation such as electrostatic or piezoelectric or electromechanical (e.g., using electromechanical micro-actuators) actuation of a membrane 21 defining the liquid tuned shape 16.

Apart from this information, the curing of the liquid 11 has also been characterized in pre-experiments. Based on a desired target surface profile 27 and using the information from the pre-experiments and the electrofluidic characterization, a required set of control signals is calculated. The signals are converted into suitable drive voltages (using a suitable driving electronics) which are applied to the actuator 10 thus tuning the FFOS 3, as was displayed in Figure 4b.

The information from the pre-experiments is used to calculate a set of suitable compensation parameters which allow to pre-compensate curing artifacts that will occur later during the curing of the liquid 11. Accordingly, the drive voltages slightly deviate from drive voltages that would be required for tuning the FFOS 3 into the target profile 27. The liquid 11 is thus cured while the compensated drive voltages are applied to the actuator 10. After fully curing the liquid 11, the control interface is decoupled from the component 1 which has now been transformed into a passive optical component 1 as the liquid 11 has fully solidified such that the FFOS 3 is no longer tunable. The final frozen shape 18 of the FFOS 3 deviates from the tuned shape 16 but now matches more closely the desired target 27, as the curing artifacts have been compensated by slightly adapting the drive signals delivered to the actuator 10, based on the calculated compensation parameters.

Figure 6 shows some more details of the fabrication of an FFOS 3 by in-situ tuning according to the invention, which may be used for rapidly prototyping various FFOS 3: In (a), the manufacturing starts with a blank substrate 33 bearing a number of actuation elements 15 and a chamber 35 formed by confinement structures 34 (e.g. in the form of sidewalls or surface modifications for example). The chamber 35 is filled with a UV-curable photopolymer liquid 11 and closed by a membrane 21 which carries a (deformable) GND electrode 30 as a counter electrode. In sub-figure (b), the surface of the membrane 21, and thereby the liquid interface forming the FFOS 3, is deformed into the desired tuned shape 16 using the integrated actuator 10, the latter being formed by the membrane 21 that can be actuated by applying suitable drive voltages to single ones of the actuation elements 15, as shown in b). In this in-situ tuning, the array of actuation electrodes 15 is driven by a close-loop control system and considering a specific optimization goal. The initially tuned shape 16, depicted in a solid line, is intended to shrink into the target surface profile 27 depicted by the dashed line, because during the UV-curing of the liquid 11 in step (c), a shrinkage occurs (as indicated by the block arrow). The necessary compensation (i.e., the difference between tuned shape 16 and target profile 27) can be obtained analytically, or using numerical simulation tools, and considering at least one compensation factor, as has been explained above. Also note that in step (c), the liquid 11 is UV-cured (thermal curing would be a suitable alternative), while the actuation electrodes 15 are kept on actuated voltage levels (as depicted already in (b)). As shown in (d), the final frozen surface shape 18, which is obtained after the liquid 11 has been fully cured, thus closely resembles the intended target surface profile 27 (illustrated again as a dashed line).

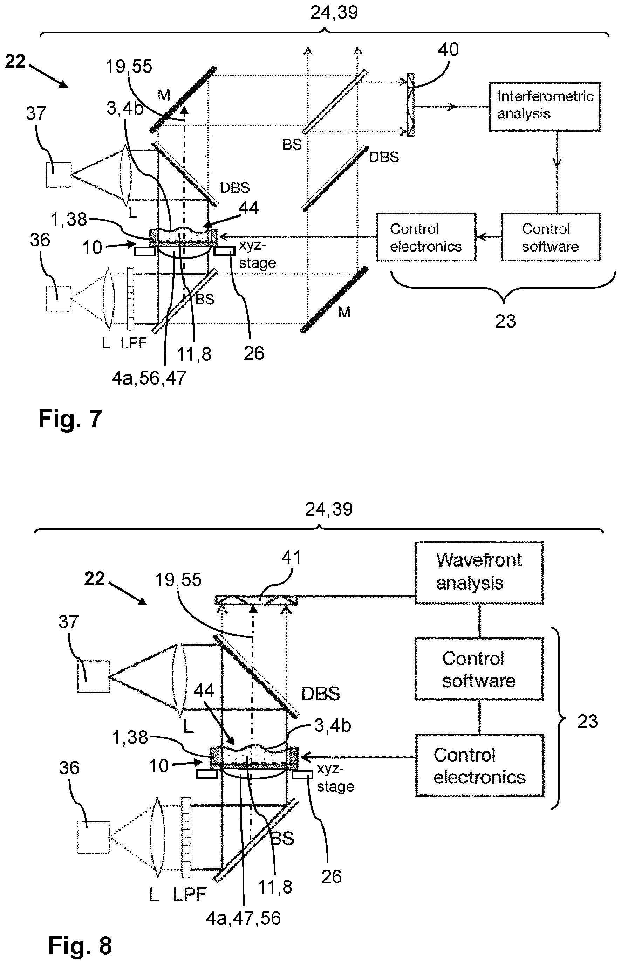

Figure 7 schematically depicts possible parts of a manufacturing tool 22 as proposed herein, which may be used for rapid prototyping of various FFOS 3 formed by a component 1 according to the invention: The tool 22 offers a control interface 23 for controlling and driving an actuator 10 that is built-into the component 1. This control is based on a particular optimization goal (namely minimizing the wavefront aberrations produced by the component 1), which forms a boundary condition for the in-situ tuning. The component 1 to be fabricated features two optical elements 4, namely a spherical glass lens 47 forming a first optical element 4a and the optical layer 8 formed by the liquid 11, which defines a FFOS 3 as a second optical element 4b. The aim of the in-situ tuning in this case is to deform the FFOS 3 in such a way that it compensates aberrations which are introduced by the first optical element 4a. The first optical element 4a/said glass lens 47, is thus a (pre-existing) passive optical element 56 (as it is non-tunable) which is remote from said FFOS 3 and not formed from said liquid 11, which forms the FFOS 3. However, both elements 4a, 4b share the beam path 19, which is employed by the optical metrology system 39 that forms part of the tool 22 and is used for providing control feedback (via the control interface 23 to the actuator 10) for the in-situ tuning of the FFOS 3.

Note that in Figure 7, the element 4a is already fabricated and aligned within the component 1. Accordingly, during the in-situ tuning of the FFOS 3, the tuned shape 16 can be aligned in the xy-plane (standing perpendicular on the optical z-axis 55, which characterizes the beam path 19 that is shared by both elements 4a, 4b of the component 1 to be fabricated) w.r.t. to the surface shape of the lens 47/the first optical element 4a. Therefore, alignment or fabrication errors of the lens 47 can be compensated by appropriate in-situ tuning (shape transformation and/or alignment) of the FFOS 3. The same statements also apply to the case of Figure 8, which will be described below.

In Figure 7, the control interface 23 is formed by a personal computer (with installed control software) and by control electronics which convert control signals delivered by the PC into suitable drive voltages to be delivered to the actuator 10. The tool 22 also comprises mounting means 26 in the form of a mechanical xyz-stage for mounting the optical component 1 and for accurately positioning the FFOS 3 within the beam path 19 of the optical metrology system 39 that forms part of the tool 22. This metrology system 39 (as one example of a possible metrology means 24) comprises a measurement laser 36, suitable optics (components M, BS, DBS, L, and LPF), and an image sensor 40 for optically measuring a momentary surface shape of the FFOS 3. As illustrated, this is performed by interferometric analysis of the data delivered by the image sensor 40. The tool 22 further comprises a UV light source 37 (as a fixation means) for UV-curing of the liquid 11 that is contained in the component 1 and forms the FFOS 3. The other components of the tool 22 are: L = lens; M = mirror; LPF = long-pass-filter; BS = beam splitter; DBS = dichroic beam splitter (wavelength selective). The tool 22 thus forms an interferometer for live closed-loop shape optimization and monitoring of the FFOS 3 to be fabricated. Due to the sensitivity of the interferometer to environmental vibrations, the tool is arranged on a suspended optical table.

Figure 8 shows an alternative embodiment of a tool 22 according to the invention: The image sensor 40 has been replaced by a Shack-Hartmann wavefront sensor (SHWS) 41, which also allows closed-loop shape optimization and monitoring of the in-situ tuned FFOS 3. In contrast to the interferometer of Figure 7, a SHWS is much less sensitive to environmental vibrations. Accordingly, the tool 22 of Figure 8 is field-deployable, i.e., it may be used at the location of a customer for fabricating customized FFOS 3.

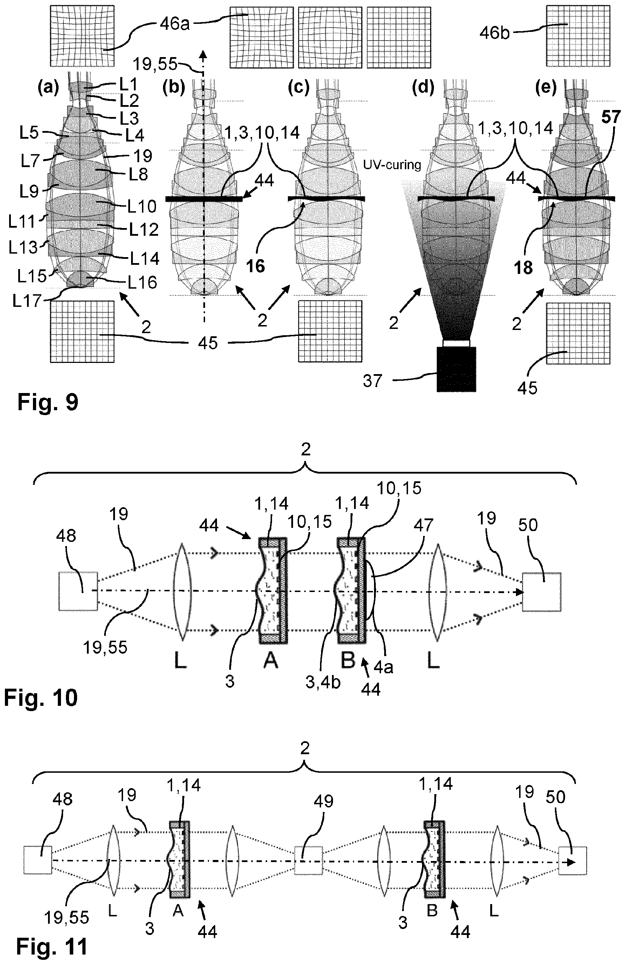

Figure 9 illustrates the benefit of in-situ tuning of a FFOS 3 fabricated with a method as proposed herein while the optical component 1 that carries and defines the (initially tunable) FFOS 3, in this case a thin phase plate 14, is arranged in a complex optical assembly 2 at its final location 44 within the assembly 2. In the example, the assembly 2 forms a microscope objective featuring multiple lenses L1-L17 (and imaging from top to bottom in Figure 9). As shown in (a), after manufacturing and aligning the microscope objective, the assembly 2 of lenses L1-L17 may show residual aberrations that affect the optical imaging performance, as can be seen by comparing the generated output field 46a with the input field 45: image distortions are clearly visible which will result in sub-optimal imaging performance. We note that the particular distortions depend on the alignment errors and fabrication tolerances of lenses L1-L17, i.e. the image distortions will vary from assembly to assembly. In (b), a component 1 according to the invention is inserted into the beam path 19 of the objective at its final location 44 (cf. sub-figure (e)) and interfaced with a control interface 23. In (c), the still tunable FFOS 3 offered by that component 1 is tuned in-situ using the control interface 23 and a suitable actuator 10 with the optimization goal of minimizing the specific image distortions which are produced by the completed assembly 2. In other words, the tuned shape 16 of the FFOS 3 is optimized by measuring the output field 46a and using it as feedback for tuning said actuator 10. In (d), an optimum surface shape of the FFOS 3 has been reached, and the liquid 11 forming the FFOS 3 is cured in-situ by UV illumination. As shown in (e), once the optical layer 8 formed by the curable liquid 11 is fully cured, the control interface 23 can be removed, and the entire microscope objective, including the fabricated component 1 (which is now no longer tunable and thus a passive optical component 1) which now forms a part of the assembly 2. As can be seen by comparing output fields 46a and 46b, the optical performance of the completed assembly 2 has been boosted, due to the introduction of the FFOS 3 which corrects some of the distortions introduced by lenses L1-L17 of the assembly 2. We note at this point, that the fabricated customized FFOS 3 can also pre-compensate aberrations, which are only introduced by optical elements 4, which follow the FFOS 3 along the beam path 19, so for example the last lens L1. In addition, it is obvious that the proposed approach can not only be applied to imaging assemblies 2 but also to optical assemblies that are used for illumination.

Figures 10 and 11 show examples of how in-situ tuning of a FFOS 3 following the concept of the invention can also be applied to cases in which more than one FFOS 3 is employed within an optical assembly 2 (or within a single optical component 1): In both figures, there is a left-hand-side optical system 48 and a right-hand-side optical system 50, and as shown in Figure 11, there may be also an optical middle system 49. Again, the performance of the overall assembly 2 / the overall optical system is boosted, respectively, by tuning the two FFOS 3 into a suitable tuned shape 16, and by freezing this shape into a final frozen surface shape 18. The in-situ tuning may be performed stepwise (optimizing the left FFOS 3 first, then the right FFOS 3) or simultaneously. As shown in Figure 10, multiple (initially tunable) FFOS 3 may be introduced in an optical system/within an assembly 2 in series to achieve a cumulative optical correction effect; or, as shown in Figure 11, multiple (initially tunable) FFOS 3 may be introduced in an optical system/within an assembly 2 in different parts of the overall optical system for introducing a respective phase modulation that achieves a particular target within the respective part.

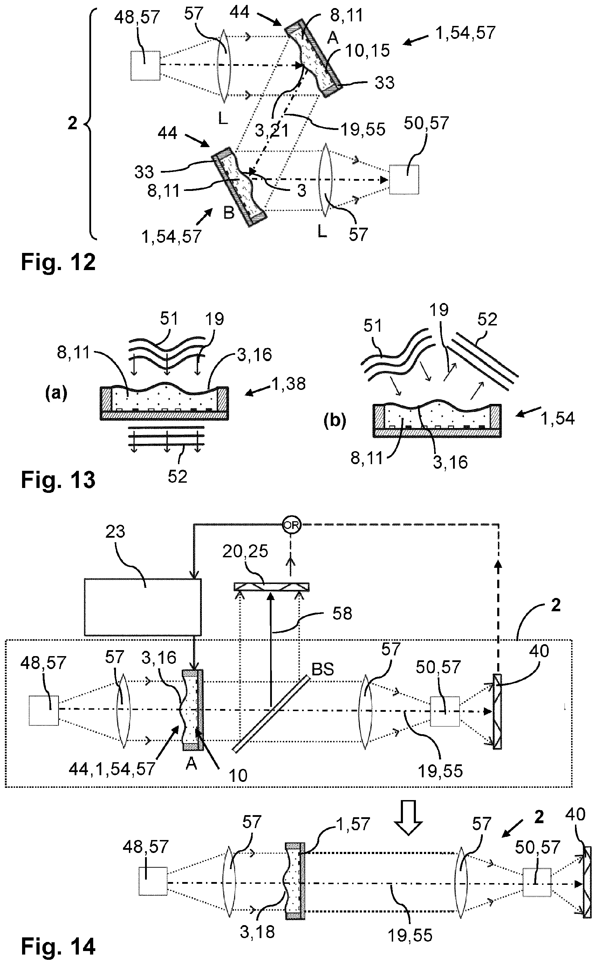

Figure 12 illustrates the case of using two reflective FFOS 3, each fabricated in-situ at the final location 44 within an assembly 2. Shown is thus the final fabricated assembly 2, with two static and no longer tunable FFOS 3, provided each by a passive optical component 57 and having been fabricated by in-situ tuning, as proposed by the invention. We note that in this case, neither the substrate 33 nor the liquid 11 of the components 1 A and B employed must be transparent. A reflective FFOS 3 may be simply formed by adding a reflective layer on top of the tunable membrane 21 or on top of said optical layer 8 that is formed by the solidified liquid 11. Generally, the membrane 21 may also be removed from the liquid 11, once it is solidified. Also note that in this example, the optical beam path 19 is folded (following the optical z-axis 55) but that again, each of the fabricated FFOS 3 is located in between at least two passive optical components 57, namely components 57 of the optical systems 48 and 50.

Figure 13 illustrates how (a) transmissive or (b) reflective FFOS 3, fabricated with a method according to the invention, may be used to deform an aberrated incoming wavefront 51 into a corrected outgoing wavefront 52, respectively.

The aberrations present in the incoming wavefront 51 may be generated by optical elements 4 or components 1 located upstream in the beam path 19 of the overall assembly 2.

Figure 14 illustrates the use of direct control feedback from a wavefront sensor 20 and/or of indirect control feedback from an image sensor 40. Both of these approaches may be used (alone or in combination) for improved control of the tuned shape 16 of an FFOS 3. Shown in Figure 14 is an optical assembly 2 that is indicated by the dotted box that forms an optical imaging system. Note that the component 1 featuring the (still tunable) FFOS 3 and the image sensor 40 form part of the assembly 2 to be fabricated (which is shown in the lower half of Figure 14) but not the wavefront sensor 20, nor the beam splitter BS and also not the control interface 23, which will no longer be necessary and thus decoupled from the actuator 10 / the assembly 2, as soon as the FFOS 3 has been frozen into its final shape 18.

As shown in the upper half of Figure 14, the in-situ tuning may be based on indirect feedback from an image sensor 40 that is part of the final assembly 2 to be fabricated. For example, from data of the image sensor 40, a figure of merit such as a resolution or image brightness may be calculated. These metrology data may then be evaluated against an optimization goal. From that evaluation, a suitable feedback may be derived and delivered to the control interface 23. This feedback will be indirect, as it is not directly based on the momentary tuned shape 16.

In the example of Figure 14, the image sensor 40 is illuminated by light that passes through the FFOS 3 (in other cases it may be reflected from the FFOS 3 as in the example of Figure 12), as shown by the imaging beam path 19 of the assembly 2. Note that in the situation of Figure 14, the FFOS 3 is tuned in-situ at its final location 44 within the assembly 2. Also note that again, the FFOS 3 is arranged between other passive optical components 57 of the assembly 2, which share the common beam path 19.

We further note the separate beam path 58 in Figure 14 produced by the beam splitter BS and branching of the beam path 19. This approach allows optical inspection of the tuned shape 16 of the FFOS 3 during in-situ tuning (in which the BS is introduced temporarily into the beam path 19) with the wavefront sensor 20. Accordingly, the sensor 20 can thus deliver a feedback to the control interface 23, which delivers drive voltages to the actuator 10 that tunes the FFOS 3. Wavefront sensor 20 is thus also illuminated by light passing through the FFOS 3. Sensor 20 can thus directly live-inspect the FFOS 3 during the in-situ tuning via the beam splitter BS (which is later removed from the assembly 2) and thus provide direct feedback to the control interface 23.

A feedback signal may be delivered by any suitable optical metrology system 39 as depicted in Figure 13 or (alternatively or additionally) by another metrology system that indirectly measures the tuned shape 16, for example using sensors that are built into the component 1.

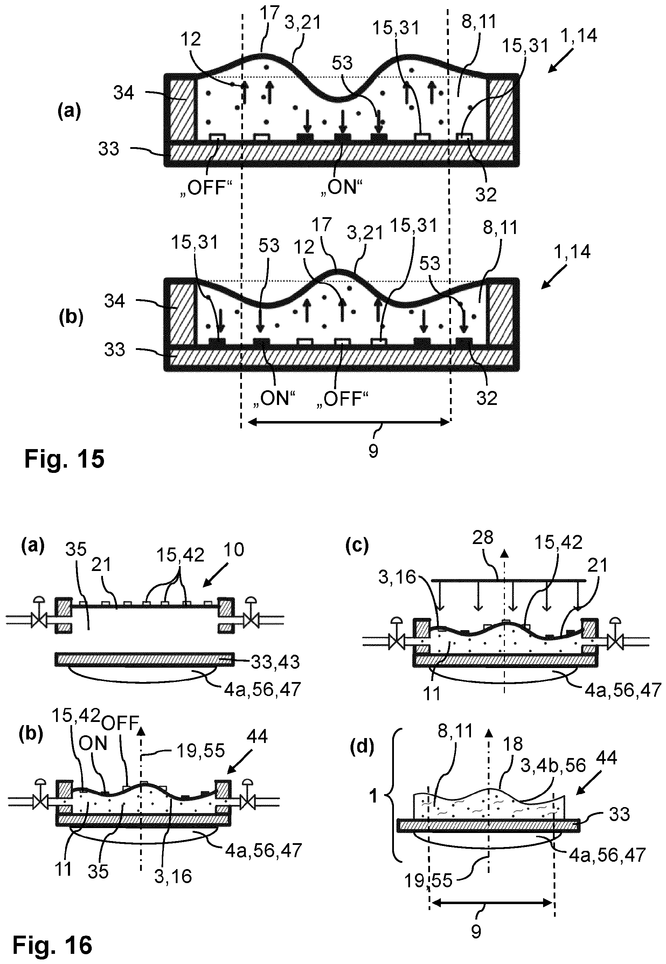

Figure 15 illustrates another example of a component 1 in the form of a phase plate 14 with an (initially tunable) FFOS 3, that is formed by a membrane 21 that is actuated electrostatically, using actuation electrodes 31 deposited on a substrate 33. As can be seen by comparing sub-figures (a) and (b), depending on which of the actuation elements 15 is energized, attractive electrostatic forces 53 can be used to generate a hydrodynamic push 12, as the liquid 11 is not yet cured and hence still deformable during the in-situ tuning. Note that there are also compensation actuation elements 32 visible, which are arranged outside of an relevant optical aperture 9 of the component 1. Said aperture 9 may be defined by a diaphragm (e.g. a thin opaque layer) formed by the component 1 or simply by the beam path 19 that is defined by other components 1 of the assembly 2 in which the FFOS 3 is employed. The use of the passive liquid 11 in the component 1 thus allows push-pull actuation of the tunable membrane 21 and thereby an improved tuning range for the FFOS 3 to be defined. The use of the at least one compensation actuation element arranged outside of the optical aperture 9 allows to increase the tuning range even further, and thus the fabrication of more complex FFOS 3.

Figure 16 illustrates in-situ tuning and fabrication according to the invention of a passive optical component 1, 57 that bears an FFOS 3, using a multi-use-actuator 10. As shown in (a), this actuator 10 features a deformable membrane 21 on which a number of micro-piezo-actuators 59 have been arranged as actuation elements 15 for tuning the shape of the membrane 10 and thereby the shape of a FFOS 3 that is defined by a liquid 11, which will form an optical layer 8 and define the final frozen shape 18 of the FFOS 3. We note at this point that the actuation elements are arranged, in particular, within a useable optical aperture 9 of the component 1, depicted in (d). The fabrication of the intended passive optical component 1,57 that is shown in sub-figure (d) starts in (a) by providing a glass substrate 33 which already bears a prefabricated (and precharacterized) lens 47 as a first optical element 4a. As this lens 47 is not tunable, it forms a (first) passive optical element 56 of the component 1.

As shown in (b) the multi-use actuator 10 is next attached to the other side of the substrate 33, thus forming a chamber 35, which is enclosed by said tunable membrane 21. The chamber 35 is then filled with a solidifiable liquid 11, namely a thermally curing and transmissive photopolymer which includes a colorant that is evenly distributed in the polymer. By driving the actuation elements 15 using suitable voltages (note that some of the elements 15 are energized and thus "ON", while others are not energized and thus "OFF"), the membrane 21 is tuned and deforms the liquid 11 into a liquid shape 16 that forms a FFOS 3. In other words, the FFOS 3 is tuned in-situ, namely at its final location 44 within the optical component 1. This tuning is performed in accordance with an optimization goal, which has been derived from an optical measurement (a mechanical surface profiling of lens 47 would also be suitable) of the first optical element 4 before starting the fabrication.

In step (c) the tuned liquid shape 16 of the FFOS 3 is frozen by thermal curing such that the liquid 11 solidifies into a permanent, solid, and non-tunable optical layer 8, which is permanently linked to the substrate 33. After disassembling the actuator 10 from the substrate 33, a stand-alone optical component 1 has been obtained as shown in (d). This component 1 is a passive optical component 57, as both of its optical elements 4a, 4b are passive optical elements 56. In particular, the FFOS 3 is no longer tunable but compensates optical aberrations which are introduced by said first optical element 4a, which have been measured in said optical measurement. Due to the colorant now present in the optical layer 8, the second optical element 4b not only forms a customized FFOS 3 but also a customized optical filter.

Note that in the example of Figure 16, the actuator 10 employed is not built-into the component 1, also not partly, as in previous examples. The actuator 10 can thus be reused multi-times for fabricating customized FFOS 3 on glass blanks 43; however, the same actuator 10 may also be used to fabricate reflective FFOS as part of a complex assembly, using a non-transmissive substrate and/or a non-transmissive liquid 11. We further note at this point that the fabrication presented in Figure 16 is mold-less, because the substrate 33, which forms part of the fabricated component 1, delimits and defines the chamber 35, and not a (reusable) lower mold half (as would be the case in classical injection molding). In other words, the optical layer 8 that forms the FFOS 3 to be fabricated is delimited (at least partly) and/or carried by a part of the component 1 itself (this part may be a flat substrate as in the case of Figure 16, a complex glass body of a prism, a pre-existing mirror surface, or any other suitable part of the final component to be fabricated).

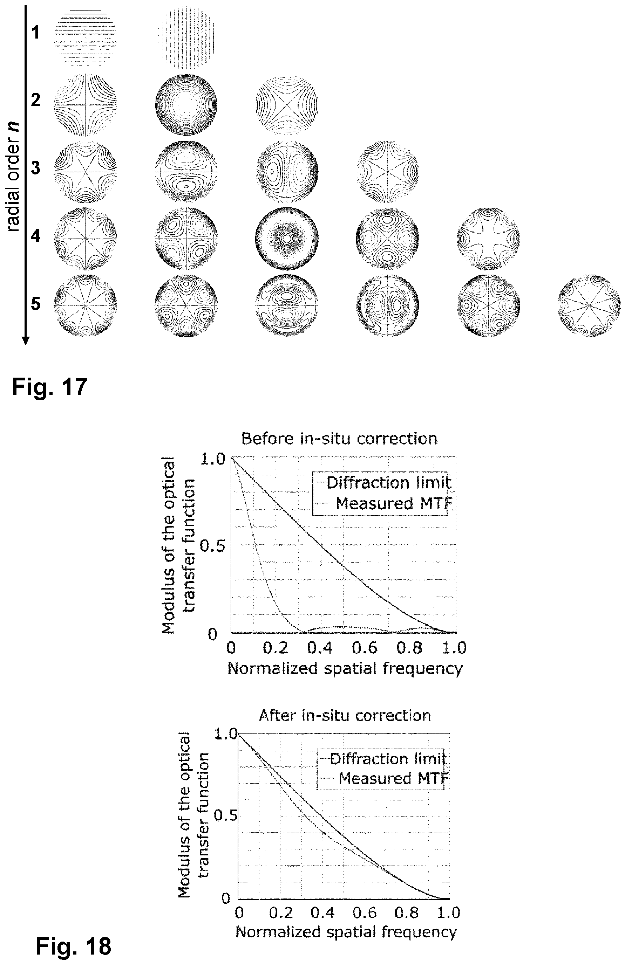

Figure 17 visualizes Zernike polynomials of different radial orders n (ordered vertically by radial degree and horizontally by azimuthal degree), which are widely used to characterize and describe a particular FFOS 3 to be defined / fabricated; according to one particular embodiment, the actuator 10 employed for the in-situ tuning can be equipped with a sufficient number of actuation elements 15 arranged within an optical aperture 9 of the FFOS 3 to be fabricated such that higher radial orders (n ≥ 3) can be defined. This way, FFOS 3 may be fabricated which include or can be described by Zernike polynomials Zn,m with n ≥ 3 (and m ≤n).

Figure 18 illustrates the advantage of the method of in-situ tuning of FFOS 3 as proposed in the example of Figure 9, for boosting the modulation transfer function (MTF) of the complex optical assembly 2 forming the optical imaging system shown in Figure 9 (a). The MTF may be considered here as an example of possible figure of merit to be optimized according to the mentioned optimization goal. The upper graph in Figure 18 shows the MTF as measured for the pre-existing (fabricated and aligned) optical assembly 2 of Figure 9 (a), i.e., before introducing the component 1 featuring the FFOS 3. As was illustrated in Figure 9 (b) to 9 €, the component 1 with the FFOS 3 was next introduced into the beam path 19 of the assembly 2 and thus arranged in the optical assembly 2 at its final location 44 within the assembly 2. Using an actuator 10, the FFOS 3 was next tuned in-situ into a tuned shape 16 as depicted in Figure 9 (c), considering the optimization goal of maximizing the MTF; next, the tuned shape 16 was fixed by UV-curing to convert the FFOS 3 into a non-tunable frozen surface shape 18 as displayed in Figure 9 (d). Accordingly, the component 1 was transformed at its final location 44 into a passive optical component 57. The resulting MTF of the assembly 2 shown in Figure 9 (e), including the fabricated FFOS 3, is shown in the lower graph of Figure 18: the improvement of the MTF-curve is clearly visible, as the measured curve is now much closer to the diffraction limit. We note at this point that, depending on the initial aberrations / alignment and/or fabrication errors present in the assembly, the improvement that can be achieved by introducing an in-situ tuned FFOS 3 may vary from assembly to assembly. However, there will always be an improvement, if the FFOS 3 is chosen appropriately.

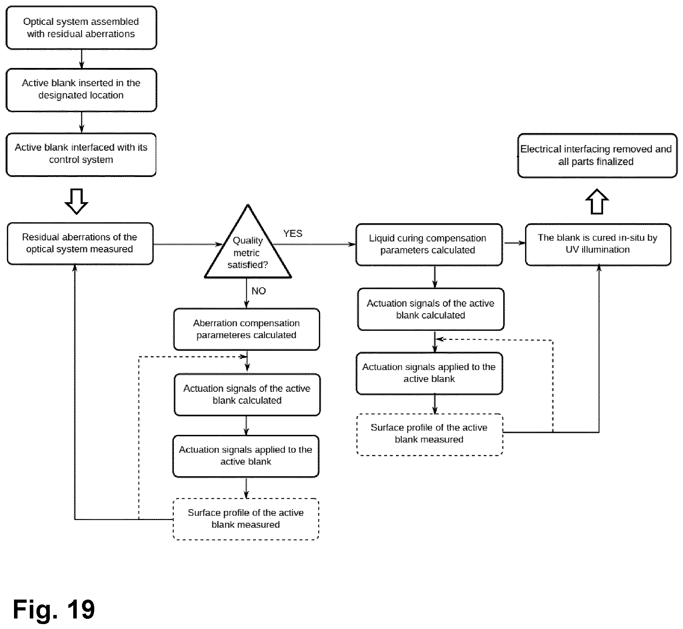

Finally, Figure 19 presents a flow chart summarizing single steps of a possible implementation of a method according to the invention for fabricating a passive FFOS 3 in-situ. The term "active blank" refers to an optical component (such as a thin phase plate) which bears an initially tunable FFOS, that is tuned in-situ as described before and later frozen into the desired passive / non-tunable FFOS 3. The "designated location" of the blank is thus its final location 44 within the assembly 2 forming the optical system. As can be seen by the first loop on the left of the flow chart, the residual aberrations of the assembly 2 including the inserted FFOS 3 may be reduced iteratively step by step, each time re-tuning the FFOS 3 until an optimized tuned shape 16 has been reached, which minimizes the residual aberrations. This may be done until a quality metric, such as a maximum allowable wavefront error in case of an imaging system or a maximum allowable variation of an illumination intensity distribution in case of an illumination system, is met. These iterations may also (optionally) include feedback that is delivered by measuring (optically or mechanically) the momentarily tuned surface profile, i.e., the tuned shape 16 of the still tunable FFOS 3.

Once the quality metric is met, the next step is to fixate the so found optimized tuned shape 16. This may include solidification / curing of a liquid 11 forming the FFOS, as explained before.

Accordingly, liquid curing compensation parameters, or simply at least one "compensation factor", may be calculated (using a computer) based on the chosen liquid 11 and/or based on the found tuned shape 16. The at least one compensation factor may then be used to calculate (slightly) modified control signals, which will be translated into modified drive voltages to be applied to the actuator by a control interface 23. Accordingly, the FFOS will be (slightly) re-tuned, away from the previously optimized tuned shape 16. As indicated by the dashed line on the right of the flow chart, there may be a feedback loop based on an additional surface profile measurement of the (slightly) re-tuned FFOS 3.

Finally, the FFOS 3, now in the re-tuned shape 16 (which slightly differs from the previously optimized tuned shape 16), will be ready for freezing by curing the liquid 11. After full curing and removing of the control interface 23 used for driving the actuator 10 (which will however only be necessary, if the actuator 10 is built into the component 1) the assembly 2, including the now fully frozen FFOS 3, is ready for use, as the final passive FFOS 3 is already at its final location 44 within the assembly 2. We note again that during the curing of the liquid 11, a slight shape transformation and/or change of the refractive index of the liquid 11 may occur, which will affect the optical performance of the optical system. However, these effects can be mitigated by the (slight) re-tuning that was done, after meeting the quality metric. As a result, the final frozen shape 18 can approach very closely the previously found optimized tuned shape 16 and/or the quality metric can still be met. Also note that it may be even necessary that the final frozen surface shape 18 of the FFOS 3 deviates strongly from the tuned shape 16, in case a significant change in refractive index of the liquid 11 occurs, in order to still meet the quality metric in the final assembly 2.

In summary, methods and tools 22 are presented for rapidly fabricating complex freeform optical surfaces 3 (FFOS). These surfaces 3 may form optical elements 4 as part of optical components 1 featuring at least one other passive optical element 56 or as part of more complex optical assemblies 2 featuring multiple components 1. By tuning the FFOS 3 in-situ at its final location 44 within said component 1 or assembly 2, it is possible to boost the optical performance of the component 1 or assembly 2. Moreover, the employment of a customizable and re-tunable FFOS 3 as a passive optical element 4b within an optical component 1 or an optical assembly 2 provides completely new approaches with respect to optical design and compensation of fabrication and alignment errors (c.f. Fig. 9 and 19).

### List of reference numerals

- 1: optical component
- 2: optical assembly
- 3: freeform optical surface (FFOS)
- 4: optical element
- 5: optical lens
- 6: mean plane (xy-plane, perpendicular to optical z-axis)
- 7: surface profile (of 3)
- 8: optical layer
- 9: optical aperture
- 10: actuator
- 11: solidifiable liquid (the liquid may be solidifiable for example by thermal or UV-curing)
- 12: hydrodynamic push
- 13: volume (of 11)
- 14: phase plate
- 15: actuation element (of 10)
- 16: tuned shape (of 3)
- 17: deflection point (of 7/3)
- 18: frozen surface shape (of 3 after solidification of 11)
- 19: beam path
- 20: wavefront sensor
- 21: membrane (defining 3 and initially tunable by 10; later fixated / freezed into 16)
- 22: manufacturing tool
- 23: control interface (may be coupled with a computer for controlling 10)
- 24: metrology means (for measuring metrology data)
- 25: sensor (providing feedback for 10)
- 26: mounting means
- 27: target surface profile
- 28: UV- and/or thermal curing
- 29: residual error
- 30: GND electrode (working as counter electrode)
- 31: actuation electrode
- 32: compensation actuation element (in particular compensation actuation electrode)
- 33: substrate
- 34: confinement structure (e.g. sidewalls)
- 35: liquid chamber
- 36: measurement laser
- 37: UV light source
- 38: transmissive optical component
- 39: optical metrology system
- 40: image sensor
- 41: Shack-Hartmann wavefront sensor (SHWS)
- 42: micro-piezo-actuators
- 43: glass blank (this may also be any suitable other substrate and must not necessarily be transparent in case of a reflective FFOS)
- 44: final location (of 1 within 2 or of 3 within 1)
- 45: input field
- 46: output field
- 47: spherical lens
- 48: optical system (left-hand-side)
- 49: optical middle system
- 50: optical system (right-hand-side)
- 51: incoming wavefront
- 52: outgoing wavefront
- 53: attractive forces (produced by 10)
- 54: reflective optical component
- 55: z-axis (characterizing 19)
- 56: passive optical element
- 57: passive optical component (e.g. lens, mirror, prism, etc.)
- 58: separate beam path (separate from 19)

## Claims

1. Method for fabricating and/or aligning an optical component (1), in particular a thin phase plate (14), within a beam path (19) of an optical assembly (2),
- wherein the optical component (1) forms part of said optical assembly (2), and
- wherein the optical assembly (2) comprises at least one optical element (4) that can receive light from or propagate light to said optical component (1) along the beam path (19), wherein,
- the optical component (1) features an initially tunable freeform optical surface (3);
- the optical component (1) is arranged in the optical assembly (2) at its final location (44) within the assembly (2);
- using an actuator (10), the freeform optical surface (3) is tuned in-situ into a tuned shape (16) according to an optimization goal, which may be a quantity to be maximized or a set of conditions to be optimized such as increasing the modulation transfer function of the overall assembly (2) ;
- the tuned shape (16) of the freeform optical surface (3) is fixed
- to convert the freeform optical surface (3) into a non-tunable frozen surface shape (18) and thus
- to transform the component (1) into a passive optical component (57) of the optical assembly (2).

2. Method according to claim 1, wherein at least one passive optical component (57) or passive optical element (56) of said assembly (2) is sharing said beam path (19) with said freeform optical surface (3) during the in-situ tuning of the freeform optical surface (3),
- in particular wherein the at least one passive optical component (57) or passive optical element (56) is remote from said freeform optical surface (3) and/or already fabricated and/or aligned,
- in particular wherein, during the in-situ tuning, the freeform optical surface (3) is located in between at least two passive optical components (57) or passive optical elements (56) of said assembly (2) sharing said beam path (19).

3. Method according to claim 1 or 2,
- wherein the actuator (10) is, at least in part preferably fully, integrated into said passive optical component (1),
- in particular wherein the actuator (10) is rendered in-operable as soon as the freeform optical surface (3) is fixed such that the optical component (1) becomes a non-tunable optical component (1).

4. Method according to claim 1 or 2, wherein
- the in-situ-tuning is performed by deforming a volume (13) of a solidifiable liquid (11) into a liquid shape (12) using the actuator (10),
- preferably wherein the final non-tunable frozen surface shape (18) is obtained by solidifying the liquid (11) into a non-tunable optical volume, in particular a non-tunable optical layer (8), which defines the frozen surface shape (18) of the freeform optical surface (3).

5. Method according to the preceding claim,
- wherein a curing artifact, which occurs during the solidification of said liquid (11), is at least partly pre-compensated by in-situ tuning the freeform optical surface (3) taking into account a compensation factor,
- in particular such that said tuned shape (16) of the freeform optical surface (3) deviates from the frozen surface shape (18) of the freeform optical surface (3) which is reached after the liquid (11) has been fully cured and/or solidified.

6. Method according to one of the claims 3 or 4,
- wherein the in-situ-tuning is performed stepwise such that after an initial curing of said liquid (11), the freeform optical surface (3) is re-tuned using the actuator (10), before the curing of the liquid (11) is finally completed to fully fixate the freeform optical surface (3) into the frozen surface shape (18).

7. Method according to one of the preceding claims,
- wherein the actuator (10) comprises a multitude of individually tunable actuation elements (15), which are arranged within an optical aperture (9) of said optical component (1),
- in particular such that
- at least two deflection points (17) of the freeform optical surface (3) can be tuned or are tuned and/or
- the freeform optical surface (3) is described by a surface profile which includes Zernike polynomials Zm,n with m,n ≥ 3.

8. Method according to one of the preceding claims,
- wherein the actuator (10) features multiple separately tunable actuation elements (15),
- preferably wherein the actuation elements (15) are configured to tune a tunable membrane (10) such that different surface shapes of the freeform optical surface (3) can be tuned in-situ.

9. Method according to one of the preceding claims,
- wherein the in-situ-tuning is performed based on, preferably optical, metrology data which are measured while the in-situ-tuning is performed,
- in particular wherein the metrology data are obtained
(i) from the tuned freeform optical surface (3) of the optical element (1) directly, for example by optical inspection of the freeform optical surface (3) using a wavefront sensor (20) and/or
(ii) from the optical assembly (2), for example by measuring the modulation transfer function (MTF) or another optical metric which characterizes the current optical performance of the assembly (2).

10. Method according to one of the preceding claims,
- wherein a figure of merit characterizing the final optical assembly (2) including the passive optical component (1) such as
- a modulation transfer function (MTF) or
- a wavefront aberration or
- an image distortion or
- an image contrast or
- a maximum number of discernible objects within a sample image or
- a deviation of an illumination intensity distribution from a target distribution or
- an optical resolution or
- a minimum focal spot size or
- a maximum light intensity and/or a maximum uniformity of illumination or
- a numerical value characterizing a point-spread function or
is optimized as a result of the active in-situ tuning of the freeform optical surface (3).

11. Method according to one of the preceding claims, wherein
- said optical assembly (2) is merely a single optical component (1) featuring a first optical element (4a) which is a passive optical element (56) and a second optical element (4b), and
- said passive optical component (1) providing the freeform optical surface (3) is said second optical element (4b),
- preferably wherein the freeform optical surface (3) of the second optical element (4b) compensates, at least partly, an optical aberration which is introduced by the first optical element (4a),
- in particular wherein the first and second optical element (4a, 4b) share a common beam path (19) and/or,
- wherein the freeform optical surface (3) is located in between at least two passive optical elements (4) of said component (1) to be fabricated sharing said beam path (19) during the in-situ tuning.

12. **Optical assembly (2) or optical component (1)** comprising
- a non-tunable freeform optical surface (3) and
- at least one first optical element (4, 4a) that can receive light from or propagate light to said freeform optical surface (3) along a beam path (19) that can be used for imaging an object or for illuminating a scene with said optical assembly (2) or optical component (1), wherein
- said freeform optical surface (3) is formed by a second optical element (4b), which forms part of said optical assembly (2) or optical component (1), and
- said second optical element (4b) features
- actuation means such as an initially tunable membrane (21) and/or actuation elements (15) for in-situ tuning of the freeform optical surface (3)
and/or
at least part of a now in-operable actuator (10), by which the freeform optical surface (3) has been tuned into a tuned shape (16);
in particular wherein the second optical element (4b) has been aligned and/or fabricated with a method according to one of the preceding claims.

13. **Use of a manufacturing tool** (22) for rapid prototyping of passive freeform optical surfaces (3) as part of an optical assembly (2) or an optical component (1),
the tool comprising:
- mounting means (26) for mounting the optical assembly (2) or the optical component (1), and
- a control interface (23) for controlling and driving an actuator (10) based on an optimization goal, which may be a quantity to be maximized or a set of conditions to be optimized with respect to the optical assembly (2) or the optical component (1), wherein
- the optical assembly (2)
or
- the optical component (1) comprising an already fabricated optical element (4a), which is already aligned within the component (1),
is mounted using the mounting means (26) into a final configuration;
- a computer is used to drive the actuator (10) via the control interface (23);
- the actuator (10) thus initially tunes a freeform optical surface (3) in-situ as an optical element (4b) of the optical assembly (2) or the optical component (1) into a tuned shape (16) according to said optimization goal;
- the tuned shape (16) of the freeform optical surface (3) is fixed;

14. Use according to the previous claim,
- wherein the actuator (10) is an external actuator (10) not forming part of the fabricated optical element (4b) of the assembly (2) or optical component (1),
or
- wherein the actuator (10) is integrated, at least in part, into the optical component (1) comprising said optical element (4b) and thus remains with the fabricated optical component (1);

15. **Computer-implemented-method** for rapidly providing passive optical components (1) or passive optical elements (4) with custom-designed freeform optical surfaces (3), the method comprising the following steps:
- a first set of digital optical design data describing a desired optical assembly (2) or optical component (1) is delivered to a computer;
- the computer creates a first optical model based on the first set of design data;
- the computer integrates a second set of digital optical design data describing
- said passive optical component (1) featuring said freeform optical surface (3), after said passive optical component (1) has been virtually inserted into the assembly (2)
or
- said passive optical element (4) featuring said freeform optical surface (3), after said passive optical element (4) has been virtually inserted into the optical component (1),
to form an extended optical model, in which the freeform optical surface (3) is included as part of said assembly (2) or said component (1) at a certain position (44) within the assembly (2)/the component (1);
- using said extended optical model and according to an optimization goal, which may be a quantity to be maximized or a set of conditions to be optimized such as increasing the modulation transfer function of the overall assembly (2), the computer
- performs an optimization of the freeform optical surface (3);
- calculates an optimized tuned shape (16) of the freeform optical surface (3); and
- delivers a set of surface parameters, in particular as a set of Zernike coefficients, which describe said tuned shape (16); and
- the set of surface parameters is employed for fabricating the freeform optical surface (3), which introduces a phase-shift ϕ(ρ,θ) that varies both with the radial coordinate ρ as well as with the azimuth angle θ.

16. Computer-implemented method according to the preceding claim, wherein the set of surface parameters is employed by
- actively tuning the freeform optical surface (3) in-situ into a tuned shape (16) and by
- finally fixing the freeform optical surface (3) to render the freeform optical surface (3) into a non-tunable frozen surface shape (18),
and/or
- wherein the freeform optical surface (3) of said optical component (1) or said optical element (4) is fabricated using
- a method according to one of the claims 1 to 10 and/or
- a manufacturing tool according to one of the claims 13 or 14.

## Patentansprüche

1. Verfahren zur Herstellung und/oder Ausrichtung einer optischen Komponente (1), insbesondere einer dünnen Phasenplatte (14), innerhalb eines Strahlpfads (19) einer optischen Anordnung (2),
- wobei die optische Komponente (1) einen Teil der optischen Anordnung (2) bildet, und
- wobei die optische Anordnung (2) mindestens ein optisches Element (4) umfasst, das Licht von der optischen Komponente (1) entlang des Strahlpfads (19) empfangen oder es dort entlang zu dieser ausbreiten kann, wobei
- die optische Komponente (1) eine anfangs abstimmbare optische Freiformoberfläche (3) aufweist;
- die optische Komponente (1) in der optischen Anordnung (2) an ihrer endgültigen Position (44) innerhalb der Anordnung (2) angeordnet wird;
- die optische Freiformoberfläche (3) unter Verwendung eines Aktuators (10) in situ zu einer abgestimmten Formgestalt (16) gemäß einem Optimierungsziel abgestimmt wird, das eine zu maximierende Menge oder ein zu optimierender Satz von Bedingungen sein kann, wie Erhöhen der Modulationsübertragungsfunktion der gesamten Anordnung (2);
- die abgestimmte Formgestalt (16) der optischen Freiformoberfläche (3) fixiert wird,
- um die optische Freiformoberfläche (3) in eine nicht-abstimmbare erstarrte Oberflächenformgestalt (18) umzuwandeln, und somit
- die Komponente (1) in eine passive optische Komponente (57) der optischen Anordnung (2) zu transformieren.

2. Verfahren nach Anspruch 1, wobei mindestens eine passive optische Komponente (57) oder mindestens ein passives optisches Element (56) der Anordnung (2) während des in situ Abstimmens der optischen Freiformoberfläche (3) den Strahlpfad (19) gemeinsam mit der optischen Freiformoberfläche (3) nutzt,
- wobei insbesondere die mindestens eine passive optische Komponente (57) oder das mindestens eine passive optische Element (56) sich von der optischen Freiformoberfläche (3) entfernt befindet und/oder bereits hergestellt und/oder ausgerichtet ist,
- wobei insbesondere während des in situ Abstimmens die optische Freiformoberfläche (3) sich zwischen mindestens zwei passiven optischen Komponenten (57) oder passiven optischen Elementen (56) der Anordnung (2) befindet, die den Strahlpfad (19) gemeinsam nutzen.

3. Verfahren nach Anspruch 1 oder 2,
- wobei der Aktuator (10) mindestens teilweise, vorzugsweise vollständig in die passive optische Komponente (1) integriert ist,
- wobei insbesondere der Aktuator (10) unbetreibbar gemacht wird, sobald die optische Freiformoberfläche (3) fixiert ist, so dass die optische Komponente (1) zu einer nicht-abstimmbaren optischen Komponente (1) wird.

4. Verfahren nach Anspruch 1 oder 2, wobei
- das in situ Abstimmen durchgeführt wird, indem ein Volumen (13) einer verfestigbaren Flüssigkeit (11) unter Verwendung des Aktuators (10) zu einer Flüssigkeitsformgestalt (12) verformt wird,
- wobei vorzugsweise die endgültige nicht-abstimmbare erstarrte Oberflächengestalt (18) erhalten wird, indem die Flüssigkeit (11) zu einem nicht-abstimmbaren optischen Volumen, insbesondere einer nicht-abstimmbaren optischen Schicht (8) verfestigt wird, die die erstarrte Oberflächenformgestalt (18) der optischen Freiformoberfläche (3) definiert.

5. Verfahren nach einem der vorhergehenden Ansprüche,
- wobei ein Härtungsartefakt, das während der Verfestigung der Flüssigkeit (11) auftritt, mindestens teilweise durch in situ Abstimmen der optischen Freiform (3), wobei ein Kompensationsfaktor berücksichtigt wird, vorab kompensiert wird,
- insbesondere derart, dass die abgestimmte Formgestalt (16) der optischen Freiformoberfläche (3) von der erstarrten Oberflächenform (18) der optischen Freiformoberfläche (3) abweicht, die erreicht wird, nachdem die Flüssigkeit (11) vollständig gehärtet und/oder verfestigt worden ist.

6. Verfahren nach einem der Ansprüche 3 oder 4,
- wobei das in situ Abstimmen schrittweise durchgeführt wird, so dass nach einer anfänglichen Härtung der Flüssigkeit (11) die optische Freiformoberfläche (3) unter Verwendung des Aktuators (10) erneut abgestimmt wird, bevor das Härten der Flüssigkeit (11) schließlich komplettiert wird, um die optische Freiformoberfläche (3) in der erstarrten Oberflächenformgestalt (18) vollständig zu fixieren.

7. Verfahren nach einem der vorhergehenden Ansprüche,
- wobei der Aktuator (10) eine Vielzahl individuell abstimmbarer Betätigungselemente (15) umfasst, die innerhalb einer optischen Apertur (9) der optischen Komponente (1) angeordnet sind,
- insbesondere derart, dass
- mindestens zwei Ablenkpunkte (17) der optischen Freiformoberfläche (3) abgestimmt werden können oder abgestimmt werden, und/oder
- die optische Freiformoberfläche (3) durch ein Oberflächenprofil beschrieben ist, das Zernike-Polynome Zm,n mit m,n ≥ 3 einschließt.

8. Verfahren nach einem der vorhergehenden Ansprüche,
- wobei der Aktuator (10) mehrere separat abstimmbare Betätigungselemente (15) aufweist,
- wobei vorzugsweise die Betätigungselemente (15) ausgestaltet sind, um eine abstimmbare Membran (10) abzustimmen, so dass unterschiedliche Oberflächenformgestalten der optischen Freiformoberfläche (3) in situ abgestimmt werden können.

9. Verfahren nach einem der vorhergehenden Ansprüche,
- wobei das in situ Abstimmen basierend auf vorzugsweise optischen Metrologiedaten durchgeführt wird, die gemessen werden, während das in situ Abstimmen durchgeführt wird,
- wobei insbesondere die Metrologiedaten erhalten werden
(i) direkt von der abgestimmten optischen Freiformoberfläche (3) des optischen Elements (1), beispielsweise durch optische Inspektion der optischen Freiformoberfläche (3) unter Verwendung eines Wellenfrontsensors (20) und/oder
(ii) aus der optischen Anordnung (2), beispielsweise durch Messen der Modulationsübertragungsfunktion (MTF) oder einer anderen optischen Metrik, die die aktuelle optische Leistung der Anordnung (2) charakterisiert.

10. Verfahren nach einem der vorhergehenden Ansprüche,
- wobei eine Gütezahl, welche die endgültige optische Anordnung (2) charakterisiert, die die passive optische Komponente (1) einschließt, wie
- eine Modulationsübertragungsfunktion (MTF) oder
- eine Wellenfrontaberration oder
- eine Bildverzerrung oder
- ein Bildkontrast oder
- eine maximale Anzahl von erkennbaren Objekten innerhalb eines Prüfbilds, oder
- eine Abweichung einer Beleuchtungsintensitätsverteilung von einer Zielverteilung, oder
- eine optische Auflösung, oder
- eine minimale Brennfleckgröße oder
- eine maximale Lichtintensität und/oder eine maximale Gleichförmigkeit der Beleuchtung, oder
- ein numerischer Wert, der eine Punktspreizfunktion charakterisiert, oder
als Ergebnis der aktiven in situ Abstimmung der optischen Freiformoberfläche (3) optimiert wird.

11. Verfahren nach einem der vorhergehenden Ansprüche, wobei
- die optische Anordnung (2) nur eine einzige optische Komponente (1) ist, die ein erstes optisches Element (4a), das ein passives optisches Element (56) ist, und ein zweites optisches Element (4b) aufweist, und
- wobei die passive optische Komponente (1), welche die optische Freiformoberfläche (3) bereitstellt, das zweite optische Element (4b) ist,
- wobei vorzugsweise die optische Freiformoberfläche (3) des zweiten optischen Elements (4b) mindestens teilweise eine optische Aberration kompensiert, die durch das erste optische Element (4a) eingebracht wird,
- wobei insbesondere das erste und das zweite optische Element (4a, 4b) einen Strahlpfad (19) gemeinsam nutzen, und/oder
- wobei die optische Freiformoberfläche (3) sich zwischen mindestens zwei passiven optischen Elementen (4) der herzustellenden Komponente (1) befindet, die während des in situ Abstimmens den Strahlpfad (19) gemeinsam nutzen.

12. Optische Anordnung (2) oder optische Komponente (1), umfassend
- eine nicht-abstimmbare optische Freiformoberfläche (3) und
- mindestens ein erstes optisches Element (4, 4a), das Licht von der optischen Freiformoberfläche (3) entlang eines Strahlpfads (19) empfangen oder dieses dort entlang ausbreiten kann, welches zur Bildgebung eines Objekts oder zur Beleuchtung einer Szene mit der optischen Anordnung (2) oder optischen Komponente (1) verwendet werden kann, wobei
- die optische Freiformoberfläche (3) durch ein zweites optisches Element (4b) gebildet wird, das Teil der optischen Anordnung (2) oder optischen Komponente (1) bildet, und
- das zweite optische Element (4b) aufweist:
- Betätigungsmittel, wie eine anfangs abstimmbare Membran (21) und/oder Betätigungselemente (15) zum in situ Abstimmen der optischen Freiformoberfläche (3), und/oder
mindestens einen Teil eines nun unbetreibbaren Aktuators (10), durch den die optische Freiformoberfläche (3) in eine abgestimmte Formgestalt (16) abgestimmt worden ist;
wobei insbesondere das zweite optische Element (4b) mit einem Verfahren gemäß einem der vorhergehenden Ansprüche ausgerichtet und/oder hergestellt worden ist.

13. Verwendung eines Herstellungswerkzeugs (22) für Rapid Prototyping von passiven optischen Freiformoberflächen (3) als Teil einer optischen Anordnung (2) oder einer optischen Komponente (1), wobei das Werkzeug umfasst:
- Montagemittel (26) zum Montieren der optischen Anordnung (2) oder der optischen Komponente (1), und
- eine Steuerschnittstelle (23) zum Steuern und Antreiben eines Aktuators (10) basierend auf einem Optimierungsziel, das eine zu maximierende Menge oder ein zu optimierender Satz von Bedingungen in Bezug auf die optische Anordnung (2) oder die optische Komponente (1) sein kann, wobei
- die optische Anordnung (2) oder
- die optische Komponente (1), die ein bereits hergestelltes optisches Element (4a) umfasst, das bereits innerhalb der Komponente (1) ausgerichtet ist,
unter Verwendung der Montagemittel (26) zu einer endgültigen Konfiguration montiert wird;
- ein Computer verwendet wird, um den Aktuator (10) über die Steuerschnittstelle (23) anzutreiben;
- der Aktuator (10) somit anfangs eine optische Freiformoberfläche (3) in situ als optisches Element (4b) der optischen Anordnung (2) oder der optischen Komponente (1) zu einer abgestimmten Formgestalt (16) gemäß dem Optimierungsziel abstimmt;
- die abgestimmte Formgestalt (16) der optischen Freiformoberfläche (3) fixiert wird.

14. Verwendung nach einem der vorhergehenden Ansprüche,
- wobei der Aktuator (10) ein externer Aktuator (10) ist, der keinen Teil des hergestellten optischen Elements (4b) der Anordnung (2) oder optischen Komponente (1) bildet, oder
- wobei der Aktuator (10) mindestens teilweise in die optische Komponente (1) integriert ist, die das optische Element (4b) umfasst, und somit bei der hergestellten optischen Komponente (1) verbleibt.

15. Computer-implementiertes Verfahren zum raschen Bereitstellen von passiven optischen Komponenten (1) oder passiven optischen Elementen (4) mit benutzerspezifisch designten optischen Freiformoberflächen (3), wobei das Verfahren die folgenden Schritte umfasst:
- ein erster Satz von digitalen optischen Designdaten, der eine gewünschte optische Anordnung (2) oder optische Komponente (1) beschreibt, wird an einen Computer abgegeben;
- der Computer erzeugt ein erstes optisches Modell basierend auf dem ersten Satz von Designdaten;
- der Computer integriert einen zweiten Satz von digitalen optischen Designdaten, der
- die passive optische Komponente (1), die die optische Freiformoberfläche (3) aufweist, nachdem die passive optische Komponente (1) virtuell in die Anordnung (2) eingesetzt worden ist, oder
- das passive optische Element (4), das die optische Freiformoberfläche (3) aufweist, nachdem das passive optische Element (4) virtuell in die optische Komponente (1) eingesetzt worden ist,
beschreibt, zum Bilden eines erweiterten optischen Modells, bei dem die optische Freiformoberfläche (3) als Teil der Anordnung (2) oder der Komponente (1) an einer bestimmten Position (44) innerhalb der Anordnung (2)/der Komponente (1) eingeschlossen ist;
- unter Verwendung des erweiterten optischen Modells und gemäß einem Optimierungsziel, das eine zu maximierende Menge oder ein zu optimierender Satz von Bedingungen sein kann, wie zum Erhöhen der Modulationsübertragungsfunktion der gesamten Anordnung (2), führt der Computer folgendes durch:
- Durchführen einer Optimierung der optischen Freiformoberfläche (3);
- Berechnen einer optimierten abgestimmten Formgestalt (16) der optischen Freiformoberfläche (3); und
- Abgeben eines Satzes von Oberflächenparametern, insbesondere als Satz von Zernike-Koeffizienten, der die abgestimmte Formgestalt (16) beschreibt; und
- der Satz von Oberflächenparametern wird zur Herstellung der optischen Freiformoberfläche (3) verwendet, die eine Phasenverschiebung ϕ(ρ,θ) einbringt, die sowohl mit der radialen Koordinate ρ als auch mit dem Azimuthwinkel θ variiert.

16. Computer-implementiertes Verfahren nach dem vorhergehenden Anspruch, wobei der Satz der Oberflächenparameter angewendet wird durch
- aktives Abstimmen der optischen Freiformoberfläche (3) in situ zu einer abgestimmten Formgestalt (16) und durch
- endgültiges Fixieren der optischen Freiformoberfläche (3), um die optische Freiformoberfläche (3) zu einer nicht-abstimmbaren erstarrten Oberflächenformgestalt (18) zu machen,
und/oder
- wobei die optische Freiformoberfläche (3) der optischen Komponente (1) oder des optischen Elements (4) hergestellt wird unter Verwendung von
- einem Verfahren nach einem der Ansprüche 1 bis 10, und/oder
- einem Herstellungswerkzeug nach einem der Ansprüche 13 oder 14.

## Revendications

1. Procédé de fabrication et/ou d'alignement d'un composant optique (1), en particulier une lame de phase mince (14), à l'intérieur d'un trajet de faisceau (19) d'un ensemble optique (2),
- dans lequel le composant optique (1) fait partie dudit ensemble optique (2), et
- dans lequel l'ensemble optique (2) comprend au moins un élément optique (4) qui peut recevoir de la lumière depuis ou propager de la lumière vers ledit composant optique (1) le long du trajet du faisceau (19), dans lequel,
- le composant optique (1) présente une surface optique de forme libre initialement ajustable (3) ;
- le composant optique (1) est agencé dans l'ensemble optique (2) à son emplacement final (44) à l'intérieur de l'ensemble (2) ;
- en utilisant un actionneur (10), la surface optique de forme libre (3) est ajustée in situ en une forme ajustée (16) selon un objectif d'optimisation, qui peut être une quantité à maximiser ou un ensemble de conditions à optimiser telles qu'une augmentation de la fonction de transfert de modulation de l'ensemble (2) ;
- la forme ajustée (16) de la surface optique de forme libre (3) est fixée
- pour convertir la surface optique de forme libre (3) en une forme de surface figée non ajustable (18) et ainsi
- pour transformer le composant (1) en un composant optique passif (57) de l'ensemble optique (2).

2. Procédé selon la revendication 1, dans lequel au moins un composant optique passif (57) ou un élément optique passif (56) dudit ensemble (2) partage ledit trajet de faisceau (19) avec ladite surface optique de forme libre (3) pendant l'ajustement in situ de la surface optique de forme libre (3),
- en particulier dans lequel le au moins un composant optique passif (57) ou élément optique passif (56) est éloigné de ladite surface optique de forme libre (3) et/ou déjà fabriqué et/ou aligné,
- en particulier dans lequel, pendant l'ajustement in situ, la surface optique de forme libre (3) est située entre au moins deux composants optiques passifs (57) ou éléments optiques passifs (56) dudit ensemble (2) partageant ledit trajet de faisceau (19).

3. Procédé selon la revendication 1 ou 2,
- dans lequel l'actionneur (10) est, au moins en partie, de préférence entièrement, intégré dans ledit composant optique passif (1),
- en particulier dans lequel l'actionneur (10) est rendu inopérant dès que la surface optique de forme libre (3) est fixée de telle sorte que le composant optique (1) devienne un composant optique non ajustable (1).

4. Procédé selon la revendication 2, dans lequel
- l'ajustement in situ est effectué en déformant un volume (13) d'un liquide solidifiable (11) en une forme liquide (12) en utilisant l'actionneur (10),
- de préférence, dans lequel la forme de surface figée non ajustable finale (18) est obtenue en solidifiant le liquide (11) en un volume optique non ajustable , en particulier une couche optique non ajustable (8), qui définit la forme de surface figée (18) de la surface optique de forme libre (3).

5. Procédé selon l'une quelconque des revendications précédentes,
- dans lequel un artefact de durcissement, qui se produit pendant la solidification dudit liquide (11), est au moins partiellement pré-compensé par un ajustement in situ de la surface optique de forme libre (3) en tenant compte d'un facteur de compensation,
- en particulier de telle sorte que ladite forme ajustée (16) de la surface optique de forme libre (3) s'écarte de la forme de surface figée (18) de la surface optique de forme libre (3) qui est atteinte après que le liquide (11) ait été complètement durci et/ou solidifié.

6. Procédé selon l'une quelconque des revendication 3 ou 4,
- dans lequel l'ajustement in situ est effectué par étapes de telle sorte qu'après un durcissement initial dudit liquide (11), la surface optique de forme libre (3) est réajustée en utilisant l'actionneur (10), avant que le durcissement du liquide (11) ne soit finalement achevé pour fixer complètement la surface optique de forme libre (3) dans la forme de surface figée (18).

7. Procédé selon l'une quelconque des revendications précédentes,
- dans lequel l'actionneur (10) comprend une multitude d'éléments d'actionnement ajustables individuellement (15), qui sont agencés à l'intérieur d'une ouverture optique (9) dudit composant optique (1),
- en particulier de telle sorte que
- au moins deux points de déviation (17) de la surface optique de forme libre (3) peuvent être ajustés ou sont ajustés et/ou
- la surface optique de forme libre (3) est décrite par un profil de surface qui inclut des polynômes de Zernike Zm, n avec m, n ≥ 3.

8. Procédé selon l'une quelconque des revendications précédentes,
- dans lequel l'actionneur (10) comporte de multiples éléments d'actionnement ajustables séparément (15),
- de préférence dans lequel les éléments d'actionnement (15) sont configurés pour ajuster une membrane ajustable (10) de telle sorte que différentes formes de surface de la surface optique de forme libre (3) peuvent être ajustées in situ.

9. Procédé selon l'une quelconque des revendications précédentes,
- dans lequel l'ajustement in situ est effectué sur la base de données métrologiques, de préférence optiques, qui sont mesurées pendant que l'ajustement in situ est effectué,
- en particulier dans lequel les données métrologiques sont obtenues
(i) à partir de la surface optique de forme libre ajustée (3) de l'élément optique (1) directement, par exemple par inspection optique de la surface optique de forme libre (3) en utilisant un capteur de front d'onde (20) et/ou
(ii) à partir de l'ensemble optique (2), par exemple en mesurant la fonction de transfert de modulation (MTF) ou une autre métrique optique qui caractérise les performances optiques actuelles de l'ensemble (2).

10. Procédé selon l'une quelconque des revendications précédentes,
- dans lequel un facteur de mérite caractérisant l'ensemble optique final (2) incluant le composant optique passif (1), tel que
- une fonction de transfert de modulation (MTF) ou
- une aberration de front d'onde ou
- une distorsion d'image ou
- un contraste d'image ou
- un nombre maximal d'objets discernables dans une image d'échantillon ou
- une déviation d'une distribution d'intensité d'éclairage par rapport à une distribution cible ou
- une résolution optique ou
- une taille minimale de point focal ou
- une intensité lumineuse maximale et/ou une uniformité d'éclairage maximale ou
- une valeur numérique caractérisant une fonction d'étalement de points,
est optimisé en résultat de l'ajustement in situ actif de la surface optique de forme libre (3).

11. Procédé selon l'une quelconque des revendications précédentes, dans lequel
- ledit ensemble optique (2) est simplement un composant optique unique (1) comportant un premier élément optique (4a) qui est un élément optique passif (56) et un second élément optique (4b), et
- ledit composant optique passif (1) fournissant la surface optique de forme libre (3) est ledit second élément optique (4b),
- de préférence dans lequel la surface optique de forme libre (3) du second élément optique (4b) compense, au moins en partie, une aberration optique qui est introduite par le premier élément optique (4a),
- en particulier dans lequel les premier et second éléments optiques (4a, 4b) partagent un trajet de faisceau commun (19) et/ou,
- dans lequel la surface optique de forme libre (3) est située entre au moins deux éléments optiques passifs (4) dudit composant (1) à fabriquer partageant ledit trajet de faisceau (19) pendant l'ajustement in situ.

12. Ensemble optique (2) ou composant optique (1) comprenant
- une surface optique de forme libre non ajustable (3) et
- au moins un premier élément optique (4, 4a) qui peut recevoir ou propager de la lumière à partir de ladite surface optique de forme libre (3) le long d'un trajet de faisceau (19) qui peut être utilisé pour imager un objet ou pour éclairer une scène avec ledit ensemble optique (2) ou composant optique (1), dans lequel
- ladite surface optique de forme libre (3) est formée par un second élément optique (4b), qui fait partie dudit ensemble optique (2) ou composant optique (1), et
- ledit second élément optique (4b) comporte
- des moyens d'actionnement tels qu'une membrane initialement ajustable (21) et/ou des éléments d'actionnement (15) pour l'ajustement in situ de la surface optique de forme libre (3)
et/ou
- au moins une partie d'un actionneur maintenant opérationnel (10), au moyen duquel la surface optique de forme libre (3) a été ajustée en une forme ajustée (16) ;
en particulier dans lequel le second élément optique (4b) a été aligné et/ou fabriqué avec un procédé selon l'une quelconque des revendications précédentes.

13. Utilisation d'un outil de fabrication (22) pour un prototypage rapide de surfaces optiques de forme libre passives (3) en tant que partie d'un ensemble optique (2) ou d'un composant optique (1), l'outil comprenant :
- des moyens de montage (26) pour monter l'ensemble optique (2) ou le composant optique (1), et
- une interface de commande (23) pour commander et entraîner un actionneur (10) sur la base d'un objectif d'optimisation, qui peut être une quantité à maximiser ou un ensemble de conditions à optimiser par rapport à l'ensemble optique (2) ou au composant optique (1), dans lequel
- l'ensemble optique (2)
ou
- le composant optique (1) comprenant un élément optique déjà fabriqué (4a), qui est déjà aligné à l'intérieur du composant (1), est monté en utilisant les moyens de montage (26) dans une configuration finale ;
- un ordinateur est utilisé pour entraîner l'actionneur (10) via l'interface de commande (23) ;
- l'actionneur (10) ajuste ainsi initialement une surface optique de forme libre (3) in situ en tant qu'élément optique (4b) de l'ensemble optique (2) ou du composant optique (1) en une forme ajustée (16) selon ledit objectif d'optimisation ;
- la forme ajustée (16) de la surface optique de forme libre (3) est fixée.

14. Utilisation selon la revendication précédente,
- dans lequel l'actionneur (10) est un actionneur externe (10) ne faisant pas partie de l'élément optique fabriqué (4b) de l'ensemble (2) ou du composant optique (1),
ou
- dans lequel l'actionneur (10) est intégré, au moins en partie, dans le composant optique (1) comprenant ledit élément optique (4b) et reste ainsi avec le composant optique fabriqué (1).

15. Procédé mis en oeuvre par ordinateur pour fournir rapidement des composants optiques passifs (1) ou des éléments optiques passifs (4) avec des surfaces optiques de forme libre conçues sur mesure (3), le procédé comprenant les étapes suivantes :
- un premier ensemble de données de conception optique numérique décrivant un ensemble optique (2) ou un composant optique (1) souhaité est délivré à un ordinateur ;
- l'ordinateur crée un premier modèle optique sur la base du premier ensemble de données de conception ;
- l'ordinateur intègre un second ensemble de données de conception optique numérique décrivant
- ledit composant optique passif (1) comportant ladite surface optique de forme libre (3), après que ledit composant optique passif (1) ait été virtuellement inséré dans l'ensemble (2)
ou
- ledit élément optique passif (4) comportant ladite surface optique de forme libre (3), après que ledit élément optique passif (4) ait été virtuellement inséré dans le composant optique (1),
pour former un modèle optique étendu, dans lequel la surface optique de forme libre (3) est incluse en tant que partie dudit ensemble (2) ou dudit composant (1) à une certaine position (44) à l'intérieur de l'ensemble (2)/du composant (1) ;
- en utilisant ledit modèle optique étendu et en fonction d'un objectif d'optimisation, qui peut être une quantité à maximiser ou un ensemble de conditions à optimiser telles que l'augmentation de la fonction de transfert de modulation de l'ensemble (2), l'ordinateur
- effectue une optimisation de la surface optique de forme libre (3) ;
- calcule une forme ajustée optimisée (16) de la surface optique de forme libre (3) ; et
- délivre un ensemble de paramètres de surface, en particulier sous la forme d'un ensemble de coefficients de Zernike, qui décrivent ladite forme ajustée (16) ; et
- l'ensemble de paramètres de surface est utilisé pour fabriquer la surface optique de forme libre (3), qui introduit un déphasage ϕ (ρ, θ) qui varie à la fois avec la coordonnée radiale ρ ainsi qu'avec l'angle d'azimut θ.

16. Procédé mis en oeuvre par ordinateur selon la revendication précédente, dans lequel l'ensemble de paramètres de surface est utilisé par les étapes consistant à
- ajuster activement la surface optique de forme libre (3) in situ en une forme ajustée (16) et
- enfin fixer la surface optique de forme libre (3) pour transformer la surface optique de forme libre (3) en une forme de surface figée non ajustable (18),
et/ou
- dans lequel la surface optique de forme libre (3) dudit composant optique (1) ou dudit élément optique (4) est fabriquée en utilisant
- un procédé selon l'une quelconque des revendications 1 à 10, et/ou
- un outil de fabrication selon l'une quelconque des revendications 13 ou 14.
